# EUROPÄISCHE PATENTSCHRIFT

(11) **EP 1 320 689 B1**
(45) Veröffentlichungstag und Bekanntmachung des Hinweises auf die Patenterteilung: **07.12.2005**
(21) Anmeldenummer: 01986333.1
(22) Anmeldetag: 01.10.2001
(51) Int. Cl.: F16C 17/10, F16C 33/14

(54) **GESCHWEISSTES BUNDLAGER, VERFAHREN ZUR HERSTELLUNG VON GESCHWEISSTEN BUNDLAGERN UND VORRICHTUNG ZUR DURCHFÜHRUNG DES VERFAHRENS**
WELDED COLLAR BEARING, METHOD FOR PRODUCING WELDED COLLAR BEARINGS AND A DEVICE FOR CARRYING OUT SAID METHOD
PALIER A EMBASE SOUDE, SON PROCEDE DE PRODUCTION ET DISPOSITIF POUR L'EXECUTION DE CE PROCEDE

(30) Priorität: 29.09.2000 DE 10048256
(43) Veröffentlichungstag der Anmeldung: 25.06.2003
(73) Patentinhaber: Federal-Mogul Wiesbaden GmbH & Co.KG, 65201 Wiesbaden (DE)
(72) Erfinder: KLIER, Hans-Jürgen, 65232 Taunusstein-Bleidenstadt (DE); KIRCHHOF, Klaus, 65527 Niedernhausen (DE)
(86) Internationale Anmeldenummer: PCT/DE2001/003762
(87) Internationale Veröffentlichungsnummer: WO 2002/029269

(56) Entgegenhaltungen:
- DE-U- 8 712 192
- FR-A- 2 425 017
- GB-A- 1 512 782
- US-A- 4 288 895

## Beschreibung

Die Erfindung betrifft ein Bundlager mit einer Lagerschale und mindestens einer Anlaufscheibe, wobei die mindestens eine Anlaufscheibe auf einer äußeren Umfangsmantelfläche der Lagerschale befestigt ist.

Des Weiteren betrifft die Erfindung ein Verfahren zur Herstellung eines Bundlagers mit Lagerschale und mindestens einer Anlaufscheibe, wobei die mindestens eine Anlaufscheibe auf einer äußeren Umfangsmantelfläche der Lagerschale befestigt wird.

Des Weiteren betrifft die Erfindung eine Spannvorrichtung, insbesondere eine Spannvorrichtung zur Durchführung des genannten Herstellungsverfahrens.

Im Rahmen der vorliegenden Erfindung wird der Begriff "Bundlager" als Sammelbegriff für Bundlagerhalbschalen und Buchsen verwendet, so daß die Lagerschale sowohl als Lagerhalbschale als auch als zylinderförmige bzw. rohrförmige Buchse verstanden werden kann, wobei die Anlaufscheibe entsprechend der Lagerschale ringförmig bzw. ringsegmentförmig ausgebildet ist. Ist die Anlaufscheibe in Form eines Ringes ausgebildet, liegt in der Regel ein geschlossener Ring oder ein fast geschlossener Ring mit einem Stoß vor.

Derartige Bundlager werden für zahlreiche Anwendungsfälle, insbesondere für die Lagerung von hochbelasteten, schnell drehenden und verschleißfrei zu lagernden Wellen, wie Kurbelwelle und/oder Nockenwelle einer verbrennungskraftmaschine verwendet. Dabei verfügen diese Bundlager über eine Lagerschale und mindestens eine Anlaufscheibe, welche am linken und/oder am rechten Rand der äußeren Umfangsmantelfläche der Lagerschale befestigt ist.

Die Lagerschale dient zur Aufnahme von radialen Lagerkräften, welche über die sich in der Lagerschale drehende Welle eingeleitet werden, wohingegen die mindestens eine Anlaufscheibe zur Aufnahme von axialen Kräften dient. Sind in beide Richtungen der Welle axiale Kräfte aufzunehmen, müssen zwei Anlaufscheiben vorgesehen werden, da jeweils eine Anlaufscheibe nur in der Lage ist, die auf ihre Gleitschicht hingerichteten Kräfte aufzunehmen. Dabei sind auf der Welle Wangen vorzusehen, über die sich die Welle an der mindestens einen Anlaufscheibe abstützt.

Aufgrund der Kröpfungen der Kurbelwelle sind die Lager für die Lagerung der Kurbelwelle im Kurbelgehäuse in der Regel geteilt, wobei grundsätzlich auch geschlossene Lager und zerlegbare Kurbelwellen verwendet werden könnten.

Die üblicherweise zur axialen und radialen Lagerung einer Kurbelwelle verwendeten Bundlager bestehen aus einer halbkreisförmigen Lagerschale und mindestens einer dazu korrespondierenden Anlaufscheibe, welche auf der äußeren Umfangsmantelfläche an der Stirnseite der Lagerschale zur Aufnahme der axialen Lagerkräfte befestigt ist. Zwei derartige Bundlager ergeben ein Kurbelwellenlagen Sie werden in einer im Kurbelgehäuse angeordneten Lagerbohrung, die ebenfalls geteilt und jeweils halbkreisförmig ausgebildet ist, aufgenommen.

Dabei wird jeweils eine halbkreisförmige Lagerschale von einer zu ihr korrespondierenden halbkreisförmigen Ausnehmung im sogenannten Lagersattel bzw im Lagerdeckel aufgenommen, wobei zusätzlich mindestens eine weitere Ausnehmung für die Aufnahme und Fixierung der mindestens einen Anlaufscheibe vorgesehen werden muß.

Das Erfordernis, Ausnehmungen für das Aufnehmen der Anlaufscheiben vorzusehen, ergibt sich aus der Tatsache, daß die Anlaufscheiben in der Regel nur lose oder nicht bleibend mit der Lagerschale verbunden sind bzw. mehrteilige Bundlager verwendet werden, bei denen die Lagerschale und mindestens eine Anlaufscheibe separat im Kurbelgehäuse montiert werden.

Im Gegensatz zu den zweiteilig ausgeführten Bundlagern zur Lagerung einer Kurbelwelle werden zur Lagerung von Nockenwellen in Verbrennungskraftmaschinen üblicherweise einteilig ausgebildete Bundlager verwendet. Diese Bundlager weisen eine rohrförmige Buchse auf, an deren Stirnseite eine Anlaufscheibe angeordnet ist. Prinzipbedingt verfügen die Bundlager grundsätzlich nur über eine Anlaufscheibe, da sie in die sie aufnehmende Lagerbohrung eingepreßt werden und somit über eine zugängliche, nicht mit einer Anlaufscheibe versehene Seite verfügen müssen, die einen derartigen Fügevorgang zuläßt. Um ein Lager auszubilden, das axiale Kräfte in beide Richtungen der Nockenwelle aufnehmen kann, werden in der Regel zwei Buchsen für jedes Lager vorgesehen, wobei eine Buchse von links und eine Buchse von rechts in die Lagerbohrung eingedrückt werden.

In der DE-OS 25 28 576 wird ein Bundlager offenbart, welches eine halbkreisförmige Lagerschale und eine mit dieser Lagerschale verbundene Anlaufscheibe aufweist. Dabei besteht sowohl die halbkreisförmige Lagerschale als auch die Anlaufscheibe aus einem Stützkörper und einer auf dem Stützkörper aufgebrachten Auskleidung. Der Lagerschalenstützkörper ist mit dem Anlaufscheibenstützkörper durch Punktschweißen an örtlich begrenzten Stellen miteinander verbunden.

Vorzugsweise weist einer der Stützkörper radial gerichtete Lappen auf, welche die örtlich begrenzten Stellen für die Schweißverbindung zwischen den Stützkörpern bilden. Dabei finden sich die Lappen in der Regel am Anlaufscheibenstützkörper und im Lagerschalenstützkörper sind Schlitze zur Aufnahme jeweils eines Lappens ausgebildet.

Durch die Verschweißung der in die Schlitze eingeführten Lappen an der Stirnseite der Lagerschale wird eine starre Verbindung gebildet. Diese Verbindung hat in erster Linie den Zweck, eine einfache vorzugsweise eine mechanische Montage zu ermöglichen, wohingegen eine derartige Schweißverbindung nicht dem Ziel dient, während des Betriebs der Verbrennungskraftmaschine eine stabile Verbindung zwischen Lagerschale und Anlaufscheibe sicherzustellen.

Da die Verbindung auf örtlich begrenzte Stellen beschränkt ist, wirken dort im Betrieb große Kräfte, die gegebenenfalls zum Bruch der Schweißstellen führen können. Diesem Umstand ist bei der Konstruktion des Kurbelgehäuses wiederum dadurch Rechnung zu tragen, daß Ausnehmungen für die Aufnahme der Anlaufscheiben an den Lagerstühlen vorzusehen sind. Sollte es dann im Betrieb zu einer Ermüdung der Schweißverbindung kommen, können die Ausnehmung anstelle der Schweißverbindung die Lagerung und Fixierung der Anlaufscheiben im Kurbelgehäuse übernehmen.

Ein diesem Bundlager ganz ähnliches Bundlager, bei dem die Lagerschale ebenfalls mit den Anlaufscheiben verschweißt ist, offenbart die DE 34 25 180 A1.

Die als Schulterhalbringe bezeichneten Anlaufscheiben werden durch Buckelschweißung oder Kondensator-Entladungsschweißung mit der Lagerschale verbunden. Dabei sind die Schulterhalbringe derart gefertigt, daß der Radius ihres inneren Umfangs in einem mittleren Bereich dem Radius des äußeren Umfangs der Lagerschale entspricht. Rechts und links dieses mittleren Bereiches, der als Befestigungsbereich der Anordnung der Schweißverbindung dient, schließen sich seitliche Bereiche an, in denen der innere Umfang der Schulterhalbringe einen größeren Radius als der Radius des äußeren Umfangs der Lagerschale hat.

Vorzugsweise weisen die Halbringe Vorsprünge zum Ausführen der Buckelschweißung auf und die Lagerschale versenkte Sitzbereiche für die Aufnahme und das Anschweißen der Schulterhalbringe.

Das fertige Bundlager verfügt über eine Lagerschale, bei der die Halbringe durch punktförmige Verschweißung mit der Stirnfläche der Lagerschale verbunden sind. Es hat sich allerdings herausgestellt, daß sich beim Betrieb der Verbrennungskraftmaschine die Anlaufscheiben infolge der durch die Kurbelwelle eingeleiteten Axialkräfte lösen können. Dies wird aber akzeptiert, da das diesem Bundlager zugrundeliegende Problem darin bestand, eine Lagerschale zu schaffen, bei welcher die Verbindung zwischen dieser und den Schulterflanschen ausreichend fest ist, um eine mechanisierte Montage zu ermöglichen (s. DE 34 25 180 A1, Seite 5, Zeile 10 ff).

Wie bei den Bundlagern der zuerst genannten Offenlegungsschrift, müssen auch hier Ausnehmungen zur Aufnahme der Anlaufscheiben in den Lagerstühlen des Kurbelgehäuses vorgesehen werden. Dies erfordert eine aufwendige Konstruktion und eine kostenintensive Fertigung des Kurbelgehäuses. Zudem müssen die nach dem Stand der Technik geschweißten Bundlager nachbearbeitet werden, da bei ihnen die Anlaufscheiben infolge eines thermischen Verzuges aufgrund des Schweißens nicht wie gefordert, senkrecht zur Lagerschale angeordnet sind.

Die leicht schräg angeordneten Anlaufscheiben haben zur Folge, daß die auf ihnen befindliche Gleitfläche zur Aufnahme der axialen Lagerkräfte und zur Abstützung der Kurbelwelle über die Kurbelwangen ebenfalls nicht senkrecht zur Kurbelachse, sondern geneigt zu dieser angeordnet sind. Dadurch werden die Anlaufscheiben nicht gleichmäßig über ihre gesamte Gleitfläche belastet, sondern nur partiell, was zu einer Überbelastung führen kann mit der Folge von Materialabtrag und Lagerzerstörung, aber auch zu einem Schwingungsbruch der Anlaufscheibe.

Neben den geschweißten Bundlagern nach dem Stand der Technik, bei denen die Schweißverbindung in der Regel keine bleibende, sondern lediglich eine die Montage vereinfachende Schweißverbindung darstellt, werden auch gebaute Bundlager angeboten. Eine solche gebaute Bundlagerschale ist in der DE 199 24 854 C1 offenbart. Bei diesem Bundlager weisen die halbkreisförmigen Lagerschalen Halteausnehmungen im Bereich eines axialen Randabschnitts des Radiallagerteils auf.

In diese Halteausnehmungen werden die an der Aufnahmescheibe, welche als Axiallagerteil bezeichnet wird, angeordneten, nach innen vorspringenden Haltezungen eingeführt. Mindestens eine der Halteausnehmungen ist randoffen ausgebildet und verfügt über einen die Ausnehmung axial begrenzenden verbiegbaren Steg, welcher nach Einsetzen der Anlaufscheibe in die Lagerschale umgebogen wird und eine Hinterschneidung der Haltezunge realisiert und damit die Anlaufscheibe an der Lagerschale fixiert. Derartig formschlüssig gefügte Bundlager verfügen aber sowohl aufgrund der relativ losen, formschlüssigen Verbindung als auch aufgrund der vorzunehmenden Verformungen zur Herstellung der formschlüssigen Verbindung über eine geringe Maßgenauigkeit. Darüber hinaus ist die Realisierung einer formschlüssigen Verbindung durch Verformung der Bauteile selbst relativ zeit- und damit kostenaufwendig.

Ein Bundlager, bei dem die Lagerschale aus einer rohrförmigen Buchse besteht, an der eine kreisringförmige Anlaufscheibe in Form eines Flansches mittels Laserschweißen aufgeschweißt ist, offenbart die DE 198 23 316 A1.

Derartige Buchsen werden zur Lagerung von Nockenwellen in Verbrennungskraftmaschinen eingesetzt. Prinzipbedingt verfügen diese Bundlager grundsätzlich nur über eine Anlaufscheibe, da sie in die sie aufnehmende Lagerbohrung eingepreßt werden und somit über eine zugängliche nicht mit einer Anlaufscheibe versehene Seite verfügen müssen. Um ein Lager auszubilden, das axiale Kräfte in beide Richtungen der Nockenwelle aufnehmen kann, werden in der Regel zwei Buchsen für jedes Lager vorgesehen, wobei eine Buchse von links und eine Buchse von rechts in die Lagerbohrung eingedrückt wird.

Die zwischen Anlaufscheibe und Buchse generierte Schweißverbindung ist eine bleibende Verbindung, die nicht nur als Montagehilfe dient, sondern darüber hinaus auch im Betrieb die Fixierung der Anlaufscheibe sicherstellen soll. Folglich ist bei Verwendung derartiger Buchsen keine Ausnehmung zur Aufnahme der Anlaufscheibe im Lager vorzusehen.

Nachteilig an den derartig ausgebildeten, nach dem Stand der Technik hergestellten Bundlagern ist aber die Formungenauigkeit. Verursacht wird die Formungenauigkeit wieder durch die im Rahmen des Schweißverfahrens eingebrachte Wärme und die sich beim Abkühlen des gefügten Bundlagers ergebenden thermischen Spannungen, die dazu führen, daß die Anlaufscheibe bei dem gefertigten und abgekühlten Bundlager nicht wie gewollt senkrecht zur Lagerachse des Bundlagers steht, sondern verzogen ist. D.h. die Anlaufscheibe kippt im Rahmen des Abkühlvorganges aus der Senkrechten in Richtung der Schweißnaht. Aus diesem Grund müssen die Anlaufscheiben grundsätzlich nachbearbeitet werden, um die Fertigungstoleranzen einhalten zu können. Dies erhöht die Anzahl der Fertigungsschritte und damit die Höhe der Herstellungskosten.

Eine weitere Möglichkeit, die es gestatten würde, auf die Ausnehmungen zur Aufnahme der Anlaufscheiben zu verzichten, ergibt sich durch ein Verfahren, bei dem die Bundlager einstückig hergestellt werden. Dabei wird von einem speziell geformten, mit einem reibungsmindernden Material ausgekleideten Stützkörper ausgegangen. Die Formgebung des beschichteten Stützkörpers zu einem Bundlager mit Lagerschale und mindestens einer Anlaufscheibe erfordert jedoch zahlreiche komplexe Formgebungsschritte, die Ursache dafür sind, daß ein derartig einstückig ausgebildetes Bundlager ein überaus hochpreisiges Produkt ist. Folglich ist auch die einstückige Ausbildung des Bundlagers nicht zielführend, wenn ein preiswertes Bundlager, bei welchem die Lagerschale bleibend und stabil mit der mindestens einen Anlaufscheibe verbunden ist, bereitgestellt werden soll.

Der aufgezeigte Stand der Technik zeigt unzweideutig die Problematik der Lagerhersteller auf, ein kostengünstiges Lager zur Verfügung zu stellen. Bundlager, bei denen die Lagerschale und die mindestens eine Anlaufscheibe gar nicht verbunden sind, oder nur lose (DE 199 248 54 C1) oder nicht bleibend miteinander verbunden sind, beispielsweise durch eine lediglich als Montagehilfe dienende Schweißverbindung, erfordern ein Vorsehen von Ausnehmungen zur Aufnahme der Anlaufscheibe im Lagerstuhl.

Fest verbundene, beispielsweise gebaute Bundlager - wie sie die DE 19 823 316 A1 offenbart - sind bedingt durch den relativ aufwendigen Herstellungsprozeß kostenintensiv.

Sämtliche Lager erfordern eine Nachbearbeitung nach Durchführung der formschlüssigen oder stoffschlüssigen Verbindung.

Einstückig ausgebildete Bundlager machen zwar die Ausnehmung zur Aufnahme der Anlaufscheibe entbehrlich, sind aber selbst kostenintensiv und damit keine wirkliche Alternative zu den nach dem Stand der Technik bekannten Bundlagern.

Vor diesem Hintergrund ist es die Aufgabe der Erfindung, daß das Bundlager möglichst kostengünstig sein soll, insbesondere eine Nachbearbeitung aufgrund einer geneigten, nicht senkrechten Anlaufscheibe entfällt.

Eine weitere Teilaufgabe der vorliegenden Erfindung ist es, eine Spannvorrichtung, insbesondere eine Spannvorrichtung zur Durchführung des oben genannten Herstellungsverfahrens bereitzustellen.

Gelöst wird die erste Teilaufgabe durch ein Bundlager der gattungsbildenden Art, bei dem die Schweißnaht in axialer Richtung nur über einem Teilbereich der Fügestelle verläuft und ohne Nachbearbeitung der Winkel α zwischen der mindestens einen Anlaufscheibe und der äußeren Umfangsmantelfläche der Lagerschale einen Wert von 90° ± 50' annimmt.

Die Schweißnaht ist ausdrücklich nicht als reine Montagehilfe vorgesehen, sondern als bleibende Schweißnaht auszubilden, wobei die Schweißnaht in axialer Richtung nur über einen Teilbereich der Fügestelle verläuft.

Würde die Schweißnaht bei einem von außen geschweißten Bundlager in axialer Richtung über die gesamte Fügestelle verlaufen, insbesondere auf der Rückseite der Anlaufscheibe austreten, so wäre eine Nachbearbeitung der äußeren Umfangsmantelfläche der Lagerschale erforderlich, da die Lagerschale in dem Bereich hinter der mindestens einen Anlaufscheibe in der für sie vorgesehenen Lagerbohrung aufgenommen wird und ein exakter Sitz der Lagerschale nur gewährleistet werden kann, wenn die Lagerschale im relevanten Umfangsmantelflächenbereich eng tolerierte Maße aufweist bzw. einhält.

Aber auch wenn die Schweißnaht nicht auf der Rückseite der mindestens einen Anlaufscheibe austritt, kann durch eine in axialer Richtung zu lang ausgeführte Schweißnaht eine Nachbearbeitung erforderlich werden, da der prinzipbedingt im Rahmen des Schweißvorganges eingebrachte Wärmeeintrag zu einer Gefügeänderung und/oder einer Materialausscheidung, insbesondere im Bereich der Umfangsmantelfläche der Lagerschale, führen kann.

Eine Materialausscheidung macht sich beispielsweise durch auf der Umfangsmantelfläche der Lagerschale befindliche tropfenförmige Ausscheidungen bemerkbar. Diese zunächst flüssigen Ausscheidungen, die zusammen mit dem übrigen Bundlager nach dem Schweißvorgang abkühlen und sich zur harten Ablagerung wandeln, müssen im Rahmen einer Nachbearbeitung entfernt werden, um wiederum einen guten Sitz des Bundlagers in der Lagerbohrung zu gewährleisten.

Zudem ist das erfindungsgemäße Bundlager von vornherein so ausgeführt, daß die mindestens eine Anlaufscheibe mit der äußeren Umfangsmantelfläche der Lagerschale einen Winkel α von 90° ± 50' bildet. Da die Anlaufscheibe nach dem Schweißvorgang bereits senkrecht zur Lagerschale steht bzw. nur eine noch tolerierbare Abweichung von dem Idealwert α_{ideal}=90° aufweist, ist eine Nachbearbeitung der Anlaufscheibe zur Korrektur der Fehlstellung der Anlaufscheibe nicht notwendig.

Die senkrechte bzw. nahezu senkrechte Stelle der Anlaufscheibe wird durch ein Vorhalten bzw. ein Schrägstellen der Anlaufscheibe während des Schweißvorganges bewerkstelligt, wobei diese Maßnahme weiter unten im Rahmen des noch zu erläuternden erfindungsgemäßen Herstellungsverfahrens in allen Einzelheiten ausgeführt wird.

Vorteilhaft sind Ausführungsformen des Bundlagers, bei denen der Winkel α einen Wert von 90° ± 35', vorzugsweise einen Wert von 90° ± 25', annimmt. Vorteilhaft sind diese Ausführungsformen, da sie dem Idealwert α_{ideal}=90° immer näher kommen und somit höchsten Ansprüchen hinsichtlich der Maß- und Formgenauigkeit des Bundlagers immer besser entsprechen.

Vorteilhaft sind Ausführungsformen des Bundlagers, bei denen die Schweißnaht über eine Rückseite und eine Vorderseite verfügt und auf der Rückseite der Schweißnaht im übrigen ein im wesentlichen paralleler Spalt zwischen der äußeren Umfangsmantelfläche der Lagerschale und dem inneren Umfangsmantelflächensegment der Anlaufscheibe ausgebildet ist.

Dabei wird davon ausgegangen, daß die äußere Umfangsmantelfläche der Lagerschale und das innere Umfangsmantelflächensegment der Anlaufscheibe im wesentlichen zylinderförmig ausgebildet sind-und sich zwischen der Lagerschale und der lose auf diese Lagerschale aufgesteckten Anlaufscheibe ein ringförmiger Luftspalt befindet. Der ringförmige Luftspalt kann dabei auch nur eine Breite von wenigen Mikrometern aufweisen, wie dies beispielsweise bei Vorsehen einer Spielpassung zwischen Lagerschale und Anlaufscheibe der Fall ist.

Die beschriebene Ausführungsform ist vorteilhaft im Hinblick auf das Herstellungsverfahren, da die Anlaufscheibe mit geringeren Kräften für das Schweißen geneigt bzw. vorgespannt werden kann, als wenn die Anlaufscheibe fest auf der Lagerschale sitzt. Eine gewisse Beweglichkeit der Anlaufscheibe auf der Lagerschale ist zudem günstig für die Bewegung der Anlaufscheibe infolge der Abkühlung der Schweißverbindung.

Ein im wesentlichen paralleler Spalt auf der Rückseite der Schweißnaht bedeutet, daß die Anlaufscheibe im wesentlichen senkrecht zur äußeren Umfangsmantelfläche der Lagerschale steht, d.h. der Winkel α seinen bevorzugten Wert annimmt.

Des Weiteren ist die Ausbildung eines Spaltes ein Indikator dafür, daß die Schweißnaht nur über einen Teilbereich der Fügestelle verläuft, was zu den oben genannten Vorteilen führt.

Vorteilhaft sind Ausfühungsformen des Bundlagers, bei denen der Radius des inneren Umfangsmantelsegmentes der Anlaufscheibe dem Radius der äußeren Umfangsmantelfläche der Lagerschale im wesentlichen über den gesamten Umfang der Anlaufscheibe entspricht. Diese Ausführungsform verfügt über eine große nutzbare Fügestelle, so daß eine Schweißnaht nahezu über den gesamten Umfang der Anlaufscheibe ausgebildet werden kann. Dies erhöht die Stabilität des Bundlagers und sorgt für eine sichere bleibende Verbindung der mindestens einen Anlaufscheibe auf der Lagerschale.

Vorteilhaft sind Ausführungsformen des Bundlagers, bei denen die mindestens eine Anlaufscheibe an der Lagerschale lasergeschweißt ist. Die Generierung der zwischen Anlaufscheibe und Lagerschale angeordneten Schweißnaht mittels Laserschweißverfahren hat aufgrund der speziellen Eigenschaften des Laserschweißverfahrens positiven Einfluß auf das Bundlager und führt zu einem qualitativ hochwertigen Bundlager.

Zum einen ist das Laserschweißverfahren ein Schweißverfahren, welches ohne einen Eintrag von zusätzlichem Schweißmaterial arbeitet und sich lediglich mit der Erwärmung der zu fügenden Teile begnügt. Infolge des fehlenden Materialeintrags wird die Ausbildung einer nach außen hervortretenden Schweißnaht vermieden, weshalb das unter Umständen störende, nach außen stehende, überschüssige Schweißmaterial nicht durch Nachbearbeitung entfernt werden muß.

Des Weiteren ermöglicht das Laserschweißverfahren einen gezielten, punktuellen Wärmeeintrag in die Fügestelle, so daß die der Fügestelle benachbarten Bereiche, welche zwangsläufig ungewollt miterwärmt werden, so klein wie möglich gehalten werden können. Damit wird die Gefahr einer Gefügeänderung in diesen Bereichen und die Gefahr, daß die Lagerschale und die Anlaufscheibe ihre Form bzw. ihre geometrischen Abmessungen ändern, minimiert bzw. vermieden.

Vorteilhaft sind Ausführungsformen des Bundlagers, bei denen das Bundlager von außen geschweißt ist, so daß die Schweißnaht, welche eine Rückseite und eine Vorderseite aufweist, ihre Vorderseite auf der der Anlaufscheibenauskleidung zugewandten Seite hat.

Bundlager, welche aus einer Lagerschale und zwei auf dieser Lagerschale angeordneten Anlaufscheiben bestehen, lassen sich einfacher und kostengünstiger fertigen, wenn die Schweißnaht bzw die Schweißnähte von außen eingebracht werden. Diese Ausführungsform verfügt auch insofern über Vorteile, als die auf der Rückseite der Anlaufscheibe befindliche Umfangsmantelfläche der Lagerschale nicht durch den Schweißvorgang in Mitleidenschaft gezogen wird. Wie bereits erwähnt, wird das Bundlager über die äußere Umfangsmantelfläche der Lagerschale in der Lagerbohrung aufgenommen, so daß es sich bei der Umfangsmantelfläche um eine Passfläche handelt, welche in der Regel enge Toleranzen aufzuweisen hat.

Vorteilhaft können aber auch Ausführungsformen des Bundlagers sein, bei denen das Bundlager innen geschweißt ist, so daß die Schweißnaht, welche eine Rückseite und eine Vorderseite aufweist, ihre Vorderseite auf der der Anlaufscheibenauskleidung abgewandten Seite hat.

Vorteilhaft ist diese Ausführungsform beispielsweise bei Bundlagern, die aus einer geschlossenen rohrFörmigen Lagerschale, d.h. einer Buchse, und einer ringförmigen Anlaufscheibe, d.h. einem Anlaufring, aufgebaut sind. Aufgrund des nur einen anzuschweißenden Anlaufringes ist auch die Rückseite des Anlaufringes leicht zugänglich, wovon bei zwei auf der Buchse befindlichen Anlaufringen nicht ausgegangen werden kann. Eine unter Umständen geringfügige Nachbearbeitung der Bundbuchse, beispielsweise die Entfernung von Schweißnahtmaterial, wird in Kauf genommen, wohingegen die nach dem Stand der Technik erforderliche Nachbearbeitung infolge Schrägstellung des Anlaufringes auch hier vermieden wird.

Vorteilhaft sind Ausführungsformen des Bundlagers, bei denen die Lagerschale mindestens eine in Umfangsrichtung umlaufende Nut auf einer inneren Umfangsmantelfläche der Lagerschale, vorzugsweise an deren Rand aufweist. Die Reduzierung des Querschnitts der Lagerschale führt zu einer Erhöhung der Flexibilität der Lagerschale, wobei gerade die vorzugsweise Anordnung der Nuten am Rand der Lagerschale das Abfedern an dynamischen in die Anlaufscheibe eingeleiteten Axialkräften fördert.

Vorteilhaft sind Ausführungsformen des Bundlagers, bei denen die Lagerschale mindestens eine Nut auf einer inneren Umfangsmantelfläche der Lagerschale, vorzugsweise in deren Mitte aufweist. Diese Nut erstreckt sich vorzugsweise in Umfangsrichtung, d.h. in Richtung der Kurbelwellenrotation und dient durch Aufnahme von Schmieröl als Schmierölreservoir.

Bei einem Bundlager mit zwei Anlaufscheiben sind Ausführungsformen vorteilhaft, bei denen sich die zwei Anlaufscheiben in Umfangsrichtung zumindest teilweise über die Lagerschale hinaus erstrecken.

Derartig ausgebildete Anlaufscheiben, die beispielsweise in dem unteren Kurbelgehäuseteil angeordnet sind, greifen in den gegenüberliegenden oberen Gehäuseteil und können dadurch den oberen Kurbelgehäuseteil gegenüber dem unteren Kurbelgehäuseteil fixieren bzw. zentrieren.

Vorteilhaft bei Bundlagern mit zwei Bundlagerhalbschalen, welche jeweils über eine Lagerschale und zwei Anlaufscheiben verfügen, sind Ausführungsformen, bei denen die zwei Anlaufscheiben jeder Bundlagerhalbschale an ihren Enden angeschrägt sind. Derartig ausgebildete Enden können als Montagehilfe dienen.

Vorteilhaft sind Ausführungsformen des Bundlagers, bei denen die mindestens eine Anlaufscheibe in ihrer Außenfläche Nuten aufweist, die die Außenfläche in der Art einer Sekante schneiden. Diese Nuten sind erforderlich, um einen ausreichend tragfähigen Schmierfilm auf der Gleitfläche, d.h. der Außenfläche der Anlaufscheibe, auszubilden und um Öl abzuführen.

Vorteilhaft sind Ausführungsformen des Bundlagers, bei denen die mindestens eine Anlaufscheibe an ihrem inneren Umfangsmantelflächensegment Ausstanzungen aufweist. Dabei sollte aber der Radius des inneren Umfangsmantelflächensegmentes vorzugsweise mit dem Radius des äußeren Umfangs der Lagerschale über im wesentlichen das gesamte innere Umfangsmantelflächensegment übereinstimmen.

Die mindestens eine Anlaufscheibe und die Lagerschale werden bei dieser Ausführungsform nicht über eine einzige zusammenhängende Schweißnaht verbunden, sondern über viele segmentartige jeweils zwischen zwei Ausstanzungen befindliche Schweißnähte. Die vorgesehenen Ausstanzungen erhöhen die Flexibilität des Bundlagers.

Die Teilaufgabe hinsichtlich der Herstellung eines Bundlagers mit einer Lagerschale und mindestens einer Anlaufscheibe, wobei die mindestens eine Anlaufscheibe auf einer äußeren Umfangsmantelfläche der Lagerschale befestigt wird, wird durch ein Verfahren gelöst, bei dem
- in einer Fügestelle, die zwischen einer äußeren Umfangsmantelfläche der Lagerschale und einem inneren Umfangsmantelflächensegment der Anlaufscheibe angeordnet ist, die mindestens eine Anlaufscheibe an der Lagerschale bleibend angeschweißt wird.

Das Verfahren ist dadurch gekennzeichnet, daβ
- die mindestens eine Anlaufscheibe über ihren gesamten Umfang unter einem Wmkel α ± ∈ zwischen der mindestens einen Anlaufscheibe und der äußeren Umfangsmantelfläche der Lagerschale vorgehalten wird, wobei α dem Sollwinkel zwischen der mindestens einen Anlaufscheibe und der äußeren Umfangsmantelfläche der Lagerschale entspricht und ∈ der Vorhaltewinkel ist, der derart gewählt wird, daß er nach dem Schweißvorgang und Aufhebung der Vorhaltung infolge Abkühlung kompensiert wird.

Das erfindungsgemäße Verfahren sorgt für höchste Form- und Maßgenauigkeit.

Es ermöglicht beispielsweise die Herstellung einer mit zwei Anlaufscheiben ausgestatteten Bundlagerhalbschale, welches hinsichtlich des Zwischenbundmaßes Z und Wangenmaßes W höchsten Anforderungen gerecht wird.

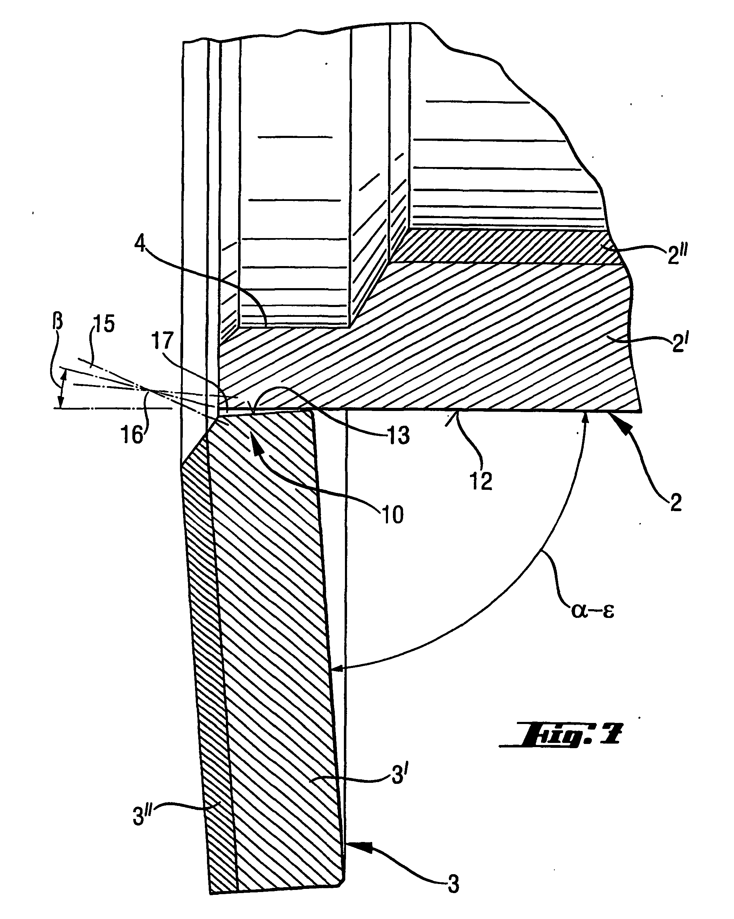

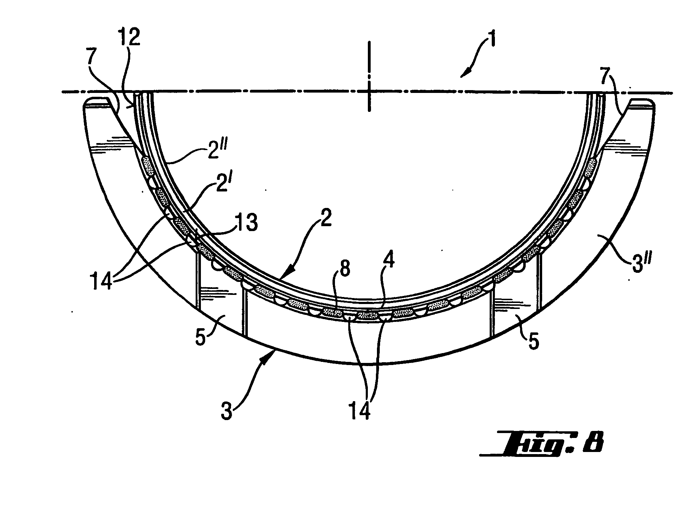

Das Zwischenbundmaß Z, welches den Abstand zwischen den beiden Anlaufscheiben beschreibt (siehe Fig. 3), ist ein für ein Bundlager äußerst wichtiges Maß, da das Bundlager in diesem Bereich in einer Lagerbohrung bzw. auf einem Lagerbock gelagert wird und für das axiale Spiel des Bundlagers auf dem Lagerbock enge Toleranzen einzuhalten sind; beispielsweise kann bei einer Spielpassung ein Toleranzfenster zwischen 20 und 80 *µ*m vorgegeben sein.

Die Maße sollten über die Höhe der Anlaufscheiben konstant sein, weshalb die Anlaußcheiben parallel zueinander und senkrecht zur Umfangsmantelfläche der Lagerschale angeordnet sein müssen. Die Herstellung möglichst senkrecht ausgerichteter Anlaufscheiben ist mit den nach dem Stand der Technik bekannten Verfahren nicht möglich, so daß eine Nachbearbeitung der nicht ausreichend senkrecht stehenden Anlaufscheiben notwendig wird.

Bei Untersuchungen hat sich gezeigt, daß die Ausrichtung der mittels Schweißverfahren angebrachten Anlaufscheiben sich nach Abkühlen der Schweißverbindung nochmals ändert, weil die Anlaufscheiben sich aufgrund der sich abkühlenden und dabei zusammenziehenden Schweißnaht verziehen und ihre Position ändern.

Erfindungsgemäß wird nun dieser Effekt bei der Herstellung berücksichtigt, indem die Anlaufscheibe über ihren gesamten Umfang um den Vorhaltewinkel ∈ vorgespannt wird, wobei der Vorhaltewinkel derart gewählt wird, daß er nach dem Schweißvorgang und Aufhebung der Vorhaltung infolge Abkühlung kompensiert wird. Das erfindungsgemäße Verfahren sieht somit eine Kompensierung des Abkühleffektes durch entsprechendes Vorspannen der Anlaufscheibe vor.

Dabei wird die Anlaufscheibe im Rahmen des Vorspannens nach außen gekippt, wenn von innen geschweißt wird und umgekehrt, nach innen gekippt, wenn von außen geschweißt wird.

Das Wangenmaß W, welches den axialen Abstand der Außenflächen der Anlaufscheiben bezeichnet (siehe Fig. 3), sollte ebenfalls über den gesamten Umfang und die Höhe der Anlaufscheiben enge Toleranzen aufweisen. Dabei ist ebenfalls das erfindungsgemäße Verfahren zielführend.

Vorteilhaft sind Verfahrensvarianten, bei denen der Vorhaltewinkelbetrag |ε| ≤ 60', vorzugsweise ≤ 50' bzw. ≤ 40', insbesondere ≤ 30' ist.

Vorteilhaft sind Verfahrensvarianten, bei denen mindestens eine Anlaufscheibe über im wesentlichen den gesamten Umfang der Anlaufscheibe an der Lagerschale angeschweißt wird. Dies sorgt für eine ausreichend feste Verbindung der Lagerschale mit der mindestens einen Anlaufscheibe und für eine hohe Stabilität des Bundlagers.

Vorteilhaft sind Verfahrensvarianten, bei denen als Schweißverfahren ein Laserschweißverfahren eingesetzt wird, wobei der Laserschweißstrahl von einem Ende einer auszubildenden Schweißnaht bis zu dem anderen Ende geführt wird. Die Vorteile dieses speziellen Schweißverfahrens sind im Zusammenhang mit den vorteilhaften Ausführungsformen des erfindungsgemäßen Bundlagers erläutert worden.

Vorteilhaft sind Verfahrensvarianten, bei denen der Lasersehweißstrahl um einen Winkel β von 10° bis 30° gegenüber der Bundlagerachse nach innen geneigt wird, wenn das Bundlager von außen geschweißt wird.

Die Neigung des Laserschweißstrahls ist in erster Linie eine Schutzmaßnahme im Hinblick auf die auf den Anlaufscheibenstutzkörper aufgetragene Anlaufscheibenauskleidung, die ansonsten bei einem Herstellungsverfahren, welches die Lagerschale und die mindestens eine Anlaufscheibe von außen, d.h. von der Stirnseite der Lagerschale aus, schweißt, angegriffen werden könnte.

Zur Unterstützung dieser Maßnahme ist die Anlaufscheibenauskleidung im Bereich des inneren Umfangsmantelflächensegmentes der Anlaufscheibe angeschrägt bzw. mit einer Phase versehen, so daß der Zugang zu der für das Verfahren relevanten Fügestelle vereinfacht wird.

Vorteilhaft sind Verfahrensvarianten, bei denen der Laserschweißstrahl fokussiert wird in der Art, daß der Fokus vor dem keilförmigen Spalt liegt, der auf Grund des Vorhaltens der Anlaufscheibe ausgebildet wird.

Dadurch, daß sich zwischen der Lagerschale und der lose aufgesteckten Anlaufscheibe ein, wenn auch nur kleiner ringförmiger Luftspalt, ausbildet, der im wesentlichen parallel ist, wenn die äußere Umfangsmantelfläche der Lagerschale und das innere Umfangsmantelflächensegment der Anlaufscheibe zylinderförmig ausgebildet sind, ergibt sich beim Anstellen der Anlaufscheibe um den Vorhaltewinkel ∈ ein keilförmiger Spalt in der Fügestelle.

Damit die zu fügenden Teile im Bereich der Fügestelle ausreichend erwärmt werden, ist der Laserstrahl im Bereich der Fügestelle mit einer ausreichenden Breite auszubilden, was beispielsweise dadurch sichergestellt werden kann, daß der Fokus des Laserstrahls vor dem keilförmigen Spalt liegt.

Aus den gleichen Gründen sind aber ebenfalls Verfahrensvarianten vorteilhaft, bei denen der Laserschweißstrahl in der Art fokussiert wird, daß der Fokus in dem keilförmigen Spalt liegt.

Vorteilbaft sind Verfahrensvarianten, bei denen der Querschnitt des Laserschweißstrahls größer als die Breite des keilförmigen Spaltes ist. Durch diese vorteilhafte Ausbildung des erfindungsgemäßen Verfährens wird sichergestellt, daß der Bereich der Fügestelle in ausreichendem Maße erwärmt wird.

Vorteilhaft sind Verfahrensvarianten, bei denen ein Schutzgas verwendet wird. Dieses Schutzgas hat zwei Funktionen. Zum einen dient, es wie bei herkömmlichen Schweißverfahren, welche ein Schutzgas verwenden, zur Vermeidung der Oxidation, indem durch das Einbringen des Schutzgases der Sauerstoff in der Fügestelle verdrängt wird.

Zum anderen dient das Einblasen eines Schutzgases zur gezielten Kühlung der in der Nachbarschaft der Fügestelle befindlichen Bereiche.

Überraschenderweise hat sich gezeigt, daß selbst das direkte Einbringen von Schutzgas in die Fügestelle die Ausbildung der Schweißnaht selbst nicht erschwert, aber in vorteilhafter Weise der ungewollten Erwärmung der benachbarten Bereiche der Fügestelle entgegenwirkt.

Vorteilhaft sind Verfahrensvarianten, bei denen das Bundlager von außen geschweißt wird, so daß die Schweißnaht, welche eine Rückseite und eine. Vorderseite aufweist, ihre Vorderseite auf der der Anlaufscheibenauskleidung zugewandten Seite hat.

Ebenfalls vorteilhaft sind Verfahren, bei denen das Bundlager innen geschweißt wird, so daß die Schweißnaht, welche eine Rückseite und eine Vorderseite aufweist, ihre Vorderseite auf der der Anlaufscheibenauskleidung abgewandten Seite hat.

Die Vorteile der beiden letztgenannten Verfahrensvarianten sind bereits im Zusammenhang mit der Erläuterung der vorteilhaften Ausführungsformen des erfindungsgemäßen Bundlagers dargelegt worden.

Vorteilhaft sind Verfahrensvarianten, bei denen die Schweißnaht im Querschnitt dreieckförmig ausgebildet wird.

Die dritte Teilaufgabe wird durch eine Spannvorrichtung zum Vorspannen mindestens einer Anlaufscheibe gelöst, welche eine Aufnahme, mindestens eine Spannbacke und mindestens zwei Spannelemente aufweist, und bei der die Aufnahme eine erste Ausnehmung zur Aufnahme einer Lagerschale aufweist, welche mittels eines ersten Spannelementes verspannt werden kann, und die Aufnahme des weiteren mindestens eine zweite Ausnehmung zur Aufnahme der mindestens einen Anlaufscheibe aufweist, wobei die Ausnehmung in der Art ausgebildet ist, daß die Anlaufscheibe mittels der mindestens einen Spannbacke und einem zweiten Spannelement über ihren gesamten Umfang unter einem Winkel α ± ∈ zwischen der mindestens einen Anlaufscheibe und der äußeren Umfängsmantelfläche der Lagerschale vorgespannt werden kann, wobei α dem Sollwinkel zwischen der mindestens einen Anlaufscheibe und der äußeren Umfangsmantelfläche der Lagerschale entspricht und ∈ der Vorhaltewinkel ist, der derart gewählt wird, daß er nach dem Schweißvorgang und Aufhebung der Vorhaltung infolge Abkühlung kompensiert wird.

Im folgenden wird die Erfindung anhand von drei Ausführungsbeispielen gemäß den Zeichnungsfiguren 1 bis 9 näher erläutert. Hierbei zeigen:
- Fig. 1: eine perspektivische Darstellung einer ersten Ausführungsform eines Bundlagers in Form einer Bundlagerhalbschale mit einer Lagerschale und zwei Anlaufscheiben,
- Fig. 2: eine Seitenansicht einer zweiten Ausführungsform eines Bundlagers in Form einer Bundlagerhalbschale mit einer Lagerschale und zwei Anlaufscheiben,
- Fig. 3: eine Ansicht der in Fig. 2 dargestellten Bundlagerhalbschale . entlang des Schnittes III - III,
- Fig. 4: eine Vergrößerung der Einzelheit Y der in Fig. 3 dargestellten Bundlagerhalbschale,
- Fig. 5: eine Vergrößerung der Einzelheit Z der in Fig. 4 dargestellten Einzelheit Y,
- Fig. 6: in der Seitenansicht einen Ausschnitt eines nicht geschweißten Bundlagers zur Veranschaulichung des Verfahrensschrittes des Vorhaltens der Anlaufscheibe,
- Fig. 7: eine Vergrößerung des in Fig. 6 dargestellten Ausschnittes eines Bundlagers mit einem in die Fügestelle gerichteten Laserstrahl zur Veranschaulichung des Schweißvorganges,
- Fig. 8: eine Seitenansicht einer dritten Ausführungsform eines Bundlagers in Form einer Bundlagerhalbschale mit einer Lagerschale und zwei Anlaufscheiben,
- Fig. 9: eine erste Ausführungsform einer Spannvorrichtung mit eingespannter Lagerschale und eingespannten Anlaufscheiben im Längsschnitt,
- Fig. 10: die in Fig. 9 dargestellte Ausführungsform einer Spannvorrichtung in der Seitenansicht, teilweise geschnitten,
- Fig. 11: eine erste Spannbacke der in Fig. 9 gezeigten Spannvorrichtung im Längsschnitt,
- Fig. 12: die Aufnahme der in Fig. 9 gezeigten Spannvorrichtung im Längsschnitt,
- Fig. 13: die zweite Spannbacke der in Fig. 9 gezeigten Spannvorrichtung im Längsschnitt,
- Fig. 14: die Einzelheit Z₁ der in Fig. 11 dargestellten ersten Spannbacke, und
- Fig. 15: die Einzelheit Z₂ der in Fig. 13 dargestellten zweiten Spannbacke.

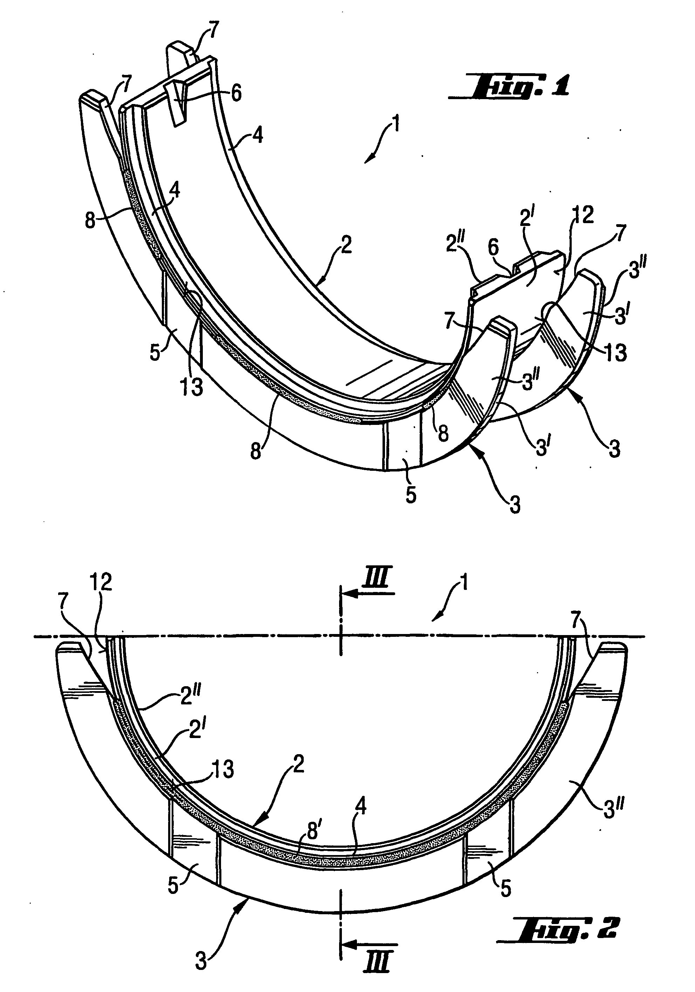

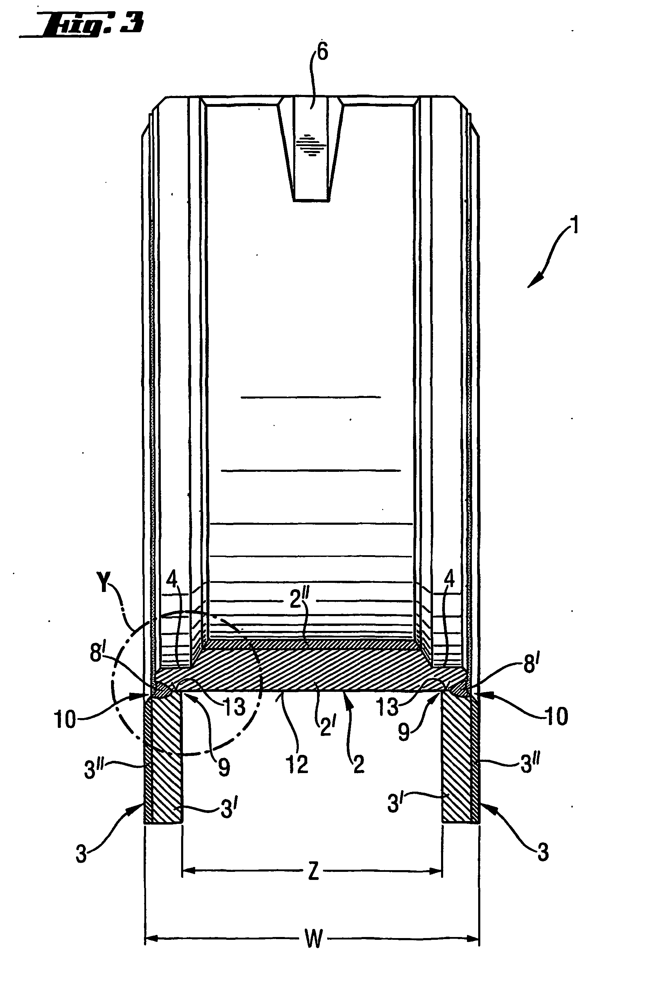

Fig. 1 zeigt in einer perspektivischen Darstellung eine erste Ausführungsform eines Bundlagers 1 in Form einer Bundlagerhalbschale mit einer Lagerschale 2 und zwei Anlaufscheiben 3. Sowohl die Lagerschale 2 als auch die Anlaufscheiben 3 sind beschichtet, wobei die Lagerschale 2 aus einem Lagerschalenstützkörper 2' und einer Lagerschalenauskleidung 2" und die Anlaufscheibe 3 aus einem Anlaufscheibenstützkörper 3' und einer Anlaufscheibenauskleidung 3" aufgebaut sind.

Der Radius des inneren Umfangsmantelsegmentes 13 der Anlaufscheibe 3 entspricht dem Radius der äußeren Umfangsmantelfläche 12 der Lagerschale 2 im wesentlichen über den gesamten Umfang der Anlaufscheibe 3. Die Anlaufscheiben 3 verfügen lediglich an ihren Enden 7 über Abschrägungen. Abgesehen von diesem Endbereich der Anlaufscheiben 3, in dem sich die Schrägen befinden, sind die Anlaufscheiben 3 mit der Lagerschale 2 durch segmentartige Schweißnähte 8 in der nutzbaren Fügestelle, die zwischen der äußeren Umfangsmantelfläche 12 der Lagerschale 2 und einem inneren Umfangsmamtelflächensegment 13 der Anlaufscheibe 3 angeordnet ist, verbunden.

Dadurch ist das Bundlager 1 sowohl stabil als auch flexibel. Die Flexibilität des Bundlagers wird durch die Nuten 4 am Rande der inneren Umfangsfläche der Lagerschale 3 in Umfangsrichtung noch erhöht. Durch die Nuten 4 wird der Querschnitt der Lagerschale 2 verringert, was die Elastizität des Bundlagers 1 erhöht.

Des Weiteren verfügt das Bundlager 1 über eine Nut 6 in der Lagerschale 2, welche zur Aufnahme von Schmieröl und damit als Schmierölreservoir dienen kann.

Auf den Außenflächen der Anlaufscheiben 3, die durch die Anlaufscheibenauskleidung 3" gebildet werden, sind Nuten 5 vorgesehen, um einen tragfähigen Schmierfilm in den durch die Anlaufscheiben 3 gebildeten Axialgleitlagern auszubilden und um Öl abzuführen.

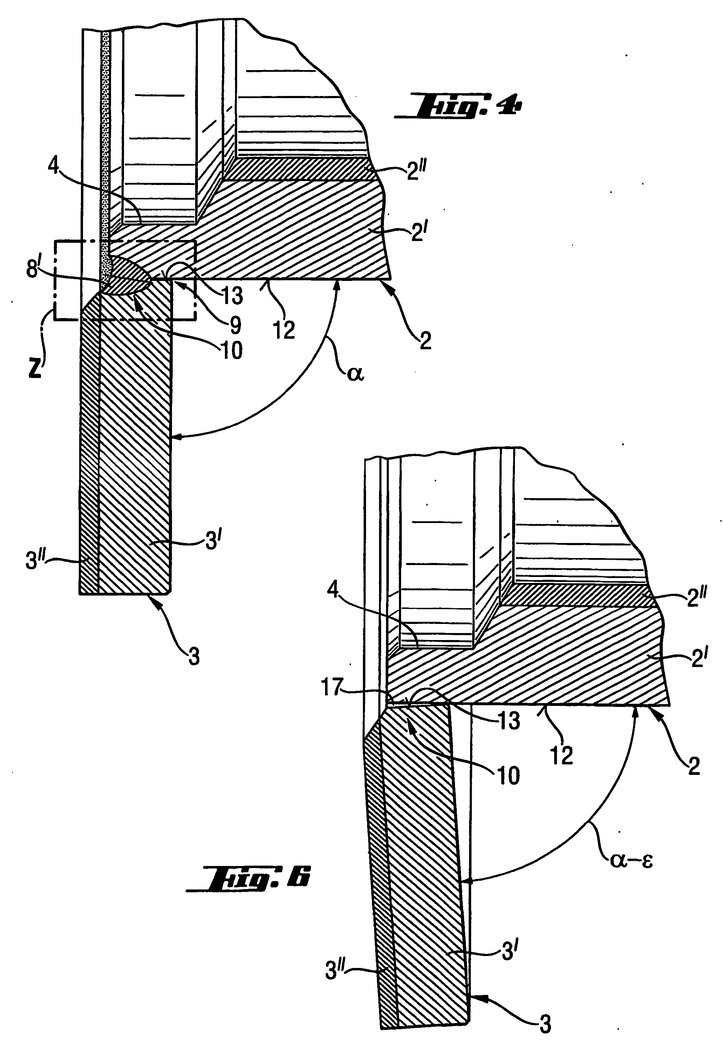

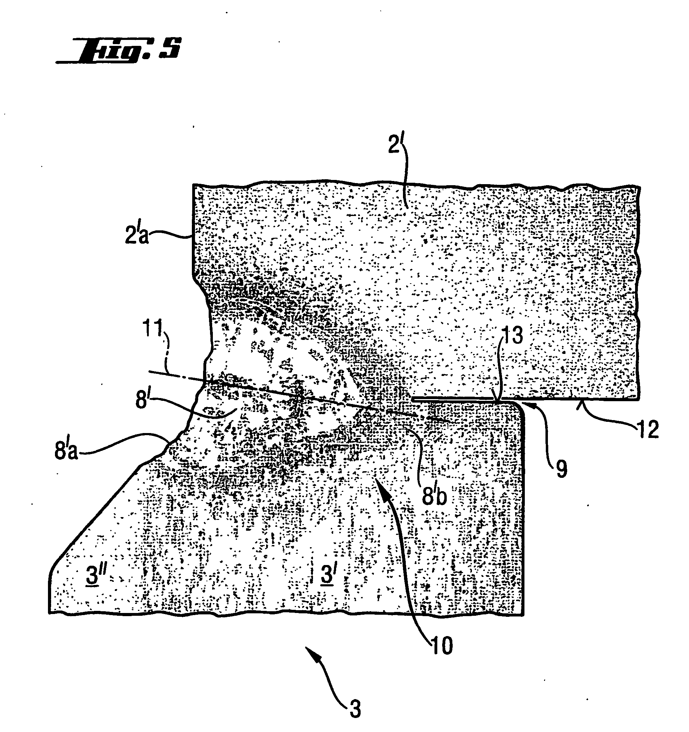

Fig. 2 zeigt in einer Seitenansicht eine zweite Ausführungsform eines Bundlagers 1 in Form einer Bundlagerhalbschale mit einer Lagerschale 2 und zwei Anlaufscheiben 3.

Diese Ausführungsform ist der in Fig. 1 dargestellten Bundlagerhalbschale ähnlich und weist ebenfalls an den Enden 7 der Anlaufscheiben 3 Abschrägungen auf. Des Weiteren verfügt auch diese Bundlagerhalbschale über in Umfangsrichtung verlaufende Nuten 4 am Rande der Lagerschale 2.

Im Gegensatz zu der in Fig. 1 dargestellten Ausfuhrungsform verfügt diese Bundlagerhalbschale jedoch über eine zusammenhängende Schweißnaht 8', wodurch ihre Stabilität weiter erhöht wird. Damit sind die Anlaufscheiben 3 im wesentlichen über ihren gesamten Umfang an der Lagerschale 2 angeschweißt.

Eine Ansicht der in Fig. 2 dargestellten Bundlagerhalbschale entlang des Schnittes III-III zeigt die Fig. 3.

Gut zu erkennen ist der Aufbau der Lagerschale 2 aus einem Lagerschalenstutzkörper 2' und einer auf diesen Stützkörper aufgetragenen Lagerschalenauskleidung 2". Die an den Rändern der Lagerschale 2 angeordneten Nuten 4 verringern den Querschnitt der Lagerschale 2 an den Stirnseiten der Lagerschale 2 und erhöhen damit die Flexibilität der Lagerschale 2 und damit des gesamten Bundlagers 1.

An den Rändern der Lagerschale 2 ist jeweils eine Anlaufscheibe 3 angeordnet, wobei diese Anlaufscheibe 3 ähnlich wie die Lagerschale 2 aus verschiedenen Materialien aufgebaut ist. Die Anlaufscheiben 3 verfügen über einen innenliegenden Anlaufscheibenstützkörper 3' und eine auf diesen Stützkörper aufgetragene Anlaufscheibenauskleidung 3", welche wie die Stirnseite der Lagerschale 2 nach außen weist.

Durch die auf der Lagerschale 2 beabstandet angeordneten Anlaufscheiben 3 wird das Zwischenbundmaß Z und das Wangenmaß W festgelegt. Dabei ergibt sich das Zwischenbundmaß Z als Abstand der beiden Anlaufscheiben 3 in Richtung der Bundlagerachse, d.h. als Abstand der beiden Anlaufscheibenstützkörper 3'. Hingegen ergibt sich das Wangenmaß W als Abstand der beiden Außenflächen der Anlaufscheiben 3 in Richtung der Bundlagerachse. Damit ergibt sich das Wangenmaß W als Summe des Zwischenbundmaßes Z und der axialen Dicke der Anlaufscheiben 3.

Wie bereits ausführlich erläutert, handelt es sich bei den beiden Maßen Z und W um eng tolerierte Maße, die hohe Anforderungen an das Herstellungsverfahren stellen. Insbesondere müssen diese Maße über die Höhe der Anlaufscheiben 3 möglichst konstant sein, was nur dadurch zu erreichen ist, daß die Anlaufscheiben 3 senkrecht auf der Lagerschale 2 angeordnet sind. Im Idealfall sollen die Anlaufscheiben 3 einen Winkel von 90° mit der äußeren Umfangsmantelfläche 12 der Lagerschale 2 bilden, wie dies in Fig. 3 dargestellt ist.

Fig. 3 zeigt im Gegensatz zu Fig. 1 und 2 die Schweißnaht 8' im Querschnitt. Die Schweißnaht 8' ist in einer Fügestelle 10, die zwischen der äußeren Umfangsmantelfläche 12 der Lagerschale 2 und einem inneren Umfangsmantelflächensegment 13 der Anlaufscheibe 3 angeordnet ist, ausgebildet. Dabei handelt es sich bei der in Fig. 3 dargestellten Bundlagerhalbschale um eine von außen geschweißte Bundlagerhalbschale. Die Schweißnaht 8' verläuft in axialer Richtung nur über einen Teilbereich der Fügestelle 10 und ist dreieckförmig ausgebildet.

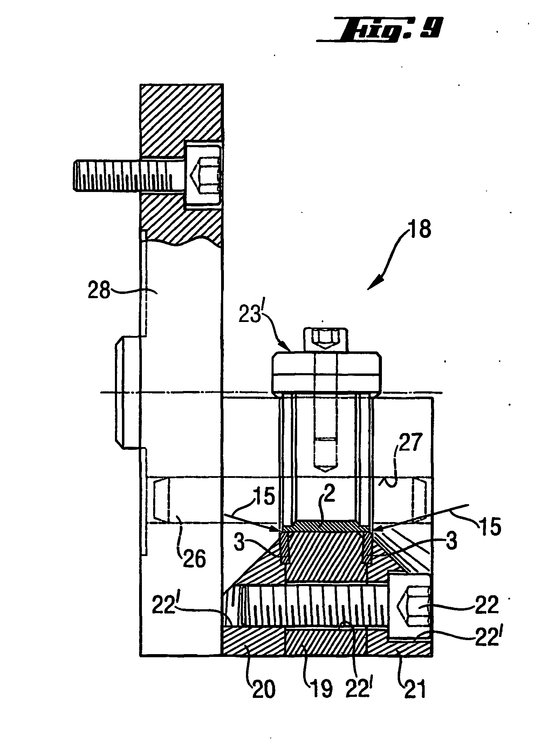

Für die nähere Erläuterung der Schweißnaht 8' bzw. der Verbindung von Anlaufscheibe 3 und Lagerschale 2 wird auf die Fig. 4 verwiesen, welche eine Vergrößerung der Einzelheit Y der in Fig. 3 dargestellten Bundlagerhalbschale zeigt.

Fig. 4 ist zu entnehmen, daß mittels der Schweißnaht 8' der Lagerschalenstützkörper 2' mit dem Anlaufscheibenstützkörper 3' verbunden wird. Die Stützkörper 2', 3' der Lagerschale 2 bzw. der Anlaufscheibe 3 sind aus schweißbarem Material, üblicherweise aus Stahl, gefertigt, wohingegen die Auskleidungen 2", 3" sowohl der Anlaufscheibe 3 als auch der Lagerschale 2 in der Regel aus Legierungen bestehen, welche nicht schweißbar sind. Die Schweißnaht 8' erstreckt sich in axialer Richtung nur über einen Teilbereich der Fügestelle 10, welche zwischen Lagerschale 2 und Anlaufscheibe 3 angeordnet ist. Folglich bildet sich auf der Rückseite der Schweißnaht 8' ein im wesentlichen paralleler Spalt 9 aus.

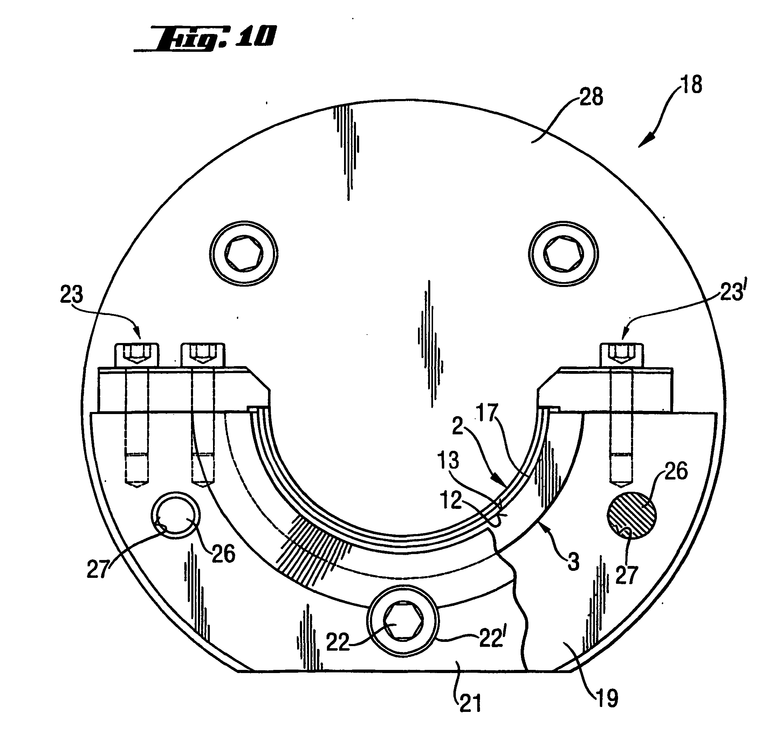

Ebenfalls in Fig. 4 eingezeichnet ist der Winkel α, welchen die Anlaufscheibe 3 mit der äußeren Umfangsmantelfläche 12 der Lagerschale 2 bildet. Dieser Winkel sollte idealerweise 90° betragen, wobei in der Praxis ein Wert von 90° ± 50' (Minuten) als ausreichend angesehen wird. Für eine noch genauere Beschreibung der Schweißnaht 8' und der Fügestelle 10 wird auf Fig. 5 verwiesen, welche eine Vergrößerung der Einzelheit Z der in Fig. 4 dargestellten Einzelheit Y darstellt.

Die Fügestelle 10 ist zwischen der äußeren Unfangsmantelfläche 12 der Lagerschale 2 und einem inneren Umfangsmantelflächensegment 13 der Anlaufscheibe 3 angeordnet. Bei dem in Fig.5 dargestellten Ausführungsbeispiel ist die äußere Kontur der Lagerschale 2 bzw. des Lagerschalenstützkörpers 2' und die innere Kontur der Anlaufscheibe 3 im wesentlichen zylinderförmig ausgebildet, so daß sich auf der Rückseite 8'b der Schweißnaht 8' ein im wesentlichen paralleler Spalt 9 ausbildet, wenn die Anlaufscheibe 3 senkrecht auf dem Lagerschalenstützkörper 2' befestigt ist.

Dabei erstreckt sich die Schweißnaht 8' nur über einen Teilbereich der Fügestelle 10. Die Schweißnaht 8', welche über eine Vorderseite 8'a und eine Rückseite 8'b verfügt, hat einen im wesentlichen dreieckförmigen Querschnitt, wobei sie sich ausgehend von der Vorderseite 8'a hin zur Rückseite 8'b verjüngt. Die in Fig. 5 dargestellte Bundlagerbalbschale ist von außen geschweißt worden, so daß die Vorderseite 8'a der Schweißnaht 8' auf der der Anlaufscheibenausldeidung 3" zugewandten Seite liegt. Sie grenzt auf einer Seite an die Anlaufscheibenauskleidung 3" und auf der anderen Seite an die Stirnseite 2'a des Lagerschalenstützkörpers 2'. -

Die Schweißnahtachse 11 ist leicht in Richtung des Lagerschalenstützkörpers 2' geneigt, was darauf zurückzuführen ist, daß der Laserschweißstrahl nicht senkrecht zur Stirnseite 2'a gehalten wurde, sondern ebenfalls leicht nach innen gestanden hat.

Des Weiteren ist die Anlaufscheibenauskleidung 3" im Bereich der Fügestelle 10 leicht angeschrägt bzw mit einer Phase versehen, um die Fügestelle 10 für den Schweißstrahl leichter zugänglich zu machen. Zudem soll durch die Abschrägung der Anlaufscheibenauskleidung 3" der Gefahr entgegengetreten werden, daß das nicht schweißbare Auskleidungsmaterial beim Schweißen in die Schweißnaht 8' eingetragen wird.

Anhand der Figuren 6 und 7 soll das erfindungsgemäße Verfahren näher erläutert werden.

Fig. 6 zeigt in der Seitenansicht einen Ausschnitt eines nicht geschweißten Bundlagers zur Veranschaulichung des Verfahrensschrittes des Vorhaltens der Anlaufscheibe 3.

Weil sich die Ausrichtung der Anlaufscheibe 3 nach Einbringen der Schweißnaht in die Fügestelle 10 infolge der Abkühlung ändert, wird nach dem erfindungsgemäBen Verfahren um den Vorhaltewinkel ∈ schräg angestellt.

Soll das Bundlager von außen geschweißt werden, d.h. wird die Schweißnaht außen im Bereich der Stirnseite der Lagerschale 2 angeordnet, muß die Anlaufscheibe 3 über ihren gesamten Umfang leicht nach innen gekippt werden, so daß die Anlaufscheibe 3 mit der äußeren Umfangsmantelfläche 12 der Lagerschale 2 einen Winkel α - ∈ bildet. Der Vorhaltewinkel ∈ wird derart gewählt, daß die Anlaufscheibe 3 sich nach dem Schweißvorgang und Aufhebung der Vorhaltung infolge Abkühlung gerade um diesen Winkel aufrichtet. Der Vorhaltewinkel ∈ ist damit eine Maßnahme zur Kompensierung des Abkühleffektes und der durch den Abkühleffekt verursachten Schrägstellung der Anlaufscheibe 3.

Auch das Vorhalten der Anlaufscheibe 3 wird in der Fügestelle 10 zwischen der äußeren Umfangsnnantelfläche 12 der Lagerschale 2 und dem inneren Umfangsmantelflächensegment 13 der Anlaufscheibe 3 ein keilförmiger Spalt 17 ausgebildet.

Fig. 7 zeigt eine Vergrößerung des in Fig. 6 dargestellten Ausschnittes eines Bundlagers mit einem in die Fügestelle 10 gerichteten Laserstrahl 15 zur Veranschaulichung des Schweißvorganges.

Der Laserstrahl 15 ist um den Winkel β nach innen geneigt und in der Art fokussiert, daß der Fokus 16 vor dem keilförmigen Spalt 17 liegt, der aufgrund des Vorhaltens der Anlaufscheibe 3 ausgebildet wird. Damit ist der Querschnitt des Laserschweißstrahls 15 größer als die Breite des keilförmigen Spaltes 17, so daß die zu fügenden Teile - die Anlaufscheibenauskleidung 3' und die Lagerschalenauskleidung 2' - in ausreichendem Maße erwärmt werden.

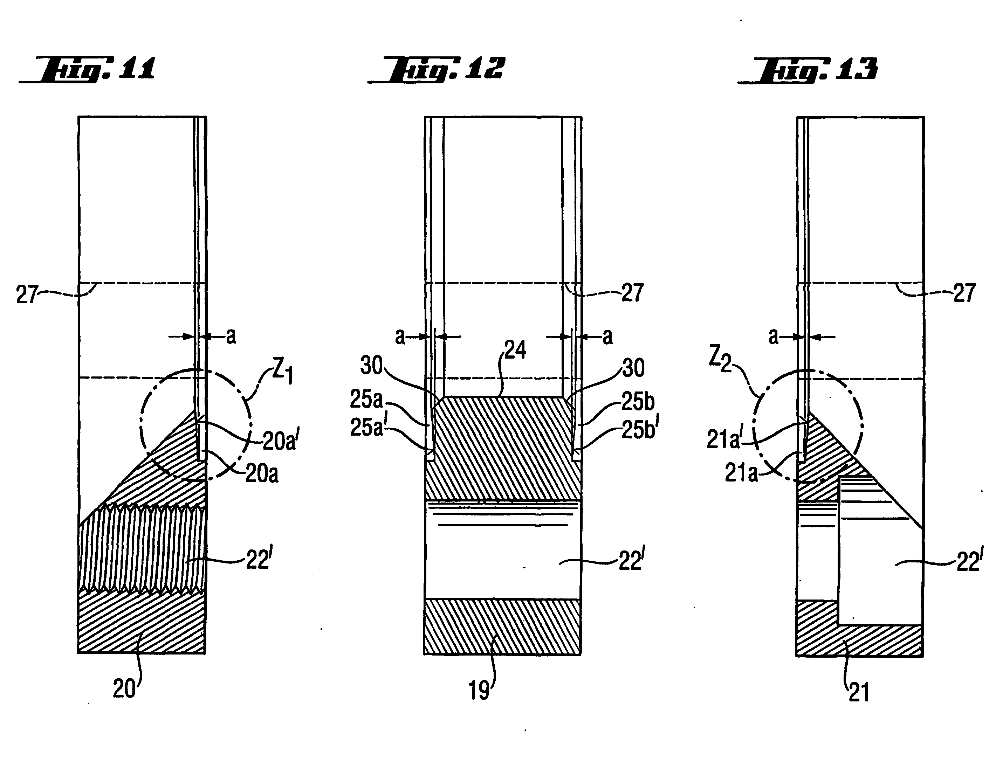

Fig. 8 zeigt in einer Seitenansicht eine dritte Ausführungsform eines Bundlagers in Form einer Bundlagerhalbschale mit einer Lagerschale 2 und zwei Anlaufscheiben 3.

Die Anlaufscheiben 3 dieser Ausführungsform weisen an ihrem inneren Umfangsmantelflächensegment 13 Ausstanzungen 14 auf. Diese Ausstanzungen 14 sind einheitlich ausgebildet und regelmäßig über die innere Kontur der Anlaufscheiben 3 verteilt. Infolge der Ausstanzungen 14 kann die Anlaufscheibe 3 nur über segmentartige Schweißnähte 8 mit der Lagerschale 2 verbunden werden, wobei jeweils zwischen zwei Ausstanzungen 14 eine segmentartige Schweißnaht 8 angeordnet ist.

Die Ausstanzungen 14 erhöhen die Flexibilität des Bundlagers. Derartige Bundlager eignen sich vor allen Dingen für Anwendungen, bei denen die Bundlager ständigen Vibrationen ausgesetzt sind, die auf diese Weise besser abgefedert bzw. kompensiert werden können.

Fig. 9 zeigt im Längsschnitt eine erste Ausführungsform einer Spannvorrichtung 18. Die Spannvorrichtung 18 weist eine Aufnahme 19 und zwei Spannbacken 20, 21 auf. Des Weiteren verfügt die Spannvorrichtung 18 über zwei Spannelemente 22, 23.

Die Spannvorrichtung 18 ist über zwei Bolzen 26 an einer Spannplatte 28 befestigt, wobei die beiden Bolzen 26 von zwei Bohrungen 27 aufgenommen werden und diese Bohrungen 27 sowohl die Spannplatte 28 als auch die gesamte Spannvorrichtung 28 durchdringen, d.h. ausgehend von der Spannplatte 28 über die zweite Spannbacke 2b und die Aufnahme 19 bis hin zur ersten Spannbacke 21 verlaufen.

In der Aufnahme 19 ist in einer ersten Ausnehmung eine Lagerschale 2 angeordnet. In zwei weiteren an den Stirnseiten der Aufnahme 19 vorgesehenen Ausnehmungen sind zwei Anlaufscheiben 3 angeordnet und mittels der beiden Spannbacken 20, 21 und eines Spannelementes 22 eingespannt. Ein weiteres Spannelement 23 dient zum Fixieren der Lagerschale 2 in der Aufnahme 19.

Das zweite Spannelement 22, mit welchem die beiden Spannbacken 20, 21 mit der zwischen ihnen angeordneten Aufnahme 19 verbunden werden, erfordert eine Aufnahme 22'. Diese Aufnahme 22' erstreckt sich ausgehend von der ersten Spannbacke 21 über die Aufnahme 19 hin zur zweiten Spannbacke 20, wobei das zweite Spannelement 22 bei dem in Fig. 9 dargestellten Ausführungsbeispiel als Schraube ausgebildet ist, und in der zweiten Spannbacke 20 ein zu dieser Schraube 22 korrespondierendes Gewinde vorgesehen ist, über das Kräfte in die Spannvorrichtung 18 eingeleitet werden können.

Fig. 10 zeigt die in Fig. 9 dargestellte Spannvorrichtung 18 in der Seitenansicht und teilweise geschnitten.

In dieser Darstellung ist die kreisringförmige Ausbildung der einzelnen Elemente der Spannvorrichtung 18 zu erkennen, die mit der äußeren Gestalt der Lagerschale 2 und der Anlaufscheiben 3 korrespondiert.

In Fig. 10 ebenfalls gut zu erkennen sind die Mittel, mit welchen die Lagerschale 2 in der Aufnahme verspannt wird. Die in die Aufnahme eingelegte Lagerhalbschale 2 stößt an ihrem einen Ende gegen einen Anschlag 23' , der im vorliegenden Ausführungsbeispiel durch eine Schraube und eine Anschlagplatte gebildet wird. Die so in die Aufnahme eingelegte Lagerschale 2 wird anschließend mit dem ersten Spannelement 23 an ihrem anderen Ende verspannt.

Das erste Spannelement 23 leitet zusammen mit dem Anschlag 23' Vorspannkräfte in Umfangsrichtung in die Lagerschale 2 ein und drückt auf diese Weise die Lagerschale 2 gegen die zuvor eingespannten Anlaufscheiben 3, so daß vor Durchführung des Schweißvorganges schon eine genügend hohe Flächenpressung zwischen der äußeren Umfangsnuntelfläche der Lagerschale und den inneren Umfangsmantelflächensegmenten der Anlaufscheiben 3 generiert wird.

Die Fign. 11, 12 und 13 veranschaulichen die wesentlichen Elemente der Spannvorrichtung.

Fig. 11 zeigt die zweite Spannbacke 20 der in Fig. 9 dargestellten Spannvorrichtung im Längsschnitt. Sie weist einen Teil der Aufnahme 22' für das zweite Spannelement auf, wobei diese Aufnahme im Bereich der zweiten Spannbacke 20 als Gewinde ausgebildet ist.

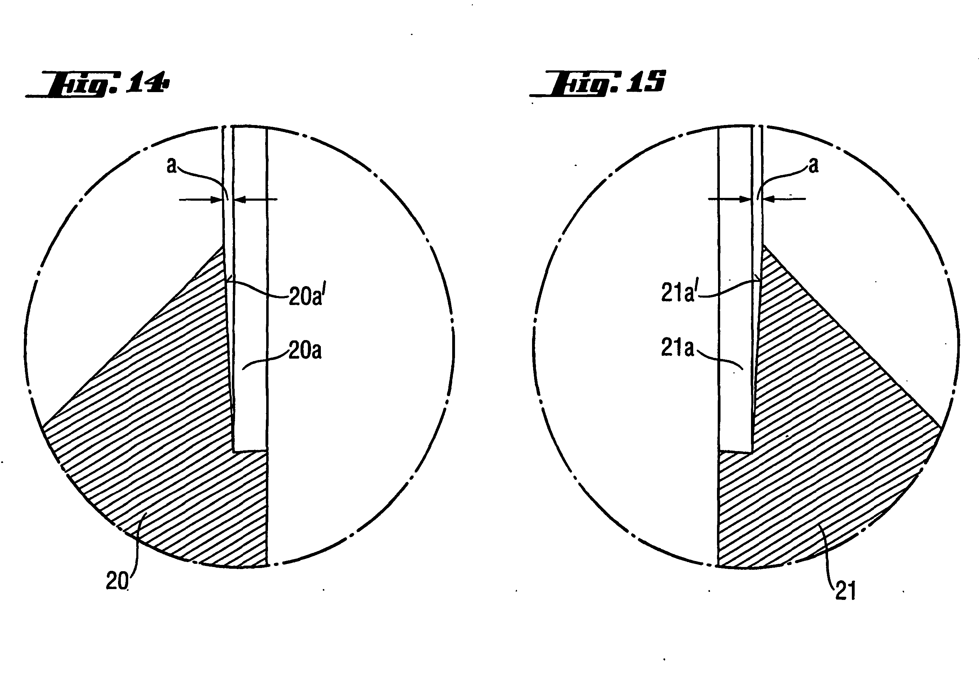

Fig. 12 zeigt die Aufnahme 19 der in Fig. 9 dargestellten Spannvorrichtung im Längsschnitt. Die Aufnahme 19 verfügt ebenfalls über einen Teil der Aufnahme 22' für das zweite Spannelement, wobei diese Aufnahme 22' im Bereich der Aufnahme 19 als Durchgangsbohrung ausgebildet ist. Des Weiteren verfügt die Aufnahme 19 über eine erste Ausnehmung 24 zur Aufnahme einer Lagerschale. Diese Ausnehmung 24 ist kreissegmentförmig ausgebildet und korrespondiert zur äußeren Gestalt der aufzunehmenden Lagerschale.

Des Weiteren verfügt die Aufnahme 19 über-zwei weitere Ausnehmungen 25a, 25b zur Aufnahme von Anlaufscheiben. Diese Ausnehmungen 25a, 25b sind an den Stirnseiten der Aufnahme 19 angeordnet und zu den Stirnseiten hin offen.

Damit die von diesen Ausnehmungen 25a, 25b aufgenommenen Anlaufscheiben sich im verspannten Zustand über ihren gesamten Umfang um den Vorhaltewinkel ∈ gegenüber der Senkrechten neigen, sind die Stirnseiten 25a', 25b' der Ausnehmungen 25a, 25b gegenüber der Senkrechten jeweils um den Vorhaltewinkel ∈ geneigt. Die Enden einer Stirnseite 25a', 25b' weisen bei dem in Fig. 12 dargestellten Beispiel einer Aufnahme jeweils einen axialen Versatz a von 0,05 mm auf.

Hat die kreisringförmige Anlaufscheibe beispielsweise einen inneren Durchmesser von 70,1 mm und einen äußeren Durchmesser von 84, 88 mm, so führt ein axialer Versatz von 0,05 mm der Enden der Stirnseite unter Berücksichtigung einer Phase 30 von 2 x 45° zu einem Vorlwtewinkel ∈ von ca. einem halben Grad bzw. 30 Minuten. Der axiale Versatz a ist für beide Ausnehmungen 25a, 25b bzw. für die beiden Stirnseiten 25a', 25b' dieser beiden Ausnehmungen in Fig. 12 ebenfalls eingezeichnet.

Fig. 13 zeigt die erste Spannbacke 21 der in Fig 9 dargestellten Spannvorrichtung im Längsschnitt. Diese Spannbacke 21 verfügt ebenfalls über einen Teil der Aufnahme 22' des zweiten Spannelementes.

In den Fign. 14 und 15 sind die Einzelheiten Z₁ und Z₂ der Fig. 11 bzw. 13 dargestellt.

Fig. 14 zeigt die Einzelheit Z₁ der in Fig. 11 dargestellten zweiten Spannbacke 20 in einer Vergrößerung von 5:1. Zu erkennen ist, daß die zweite Spannbacke 20 ebenfalls über eine Ausnehmung 20a verfügt, welche aber eine geringere Tiefe als die Ausnehmungen der in Fig. 12 dargestellten Aufnahme 19 aufweist.

Wie schon im Zusammenhang mit Fig. 12 erläutert, ist auch die Stirnseite 20a' der Ausnehmung 20a gegenüber der Senkrechten um den Vorhaltewinkel ∈ geneigt. Die beiden Enden der Stirnseite 20a' weisen hierfür einen axialen Versatz a auf. Erstreckt sich die Ausnehmung 20a der zweiten Spannbacke 20 um das gleiche Maß in radialer Richtung wie die zu ihr korrespondierende Ausnehmung der Aufnahme, dann ist der axiale Versatz a der beiden Enden der Stirnseite 20a' der Ausnehmung 20a gleich dem axialen Versatz a der Stirnseite der Ausnehmung der Aufnahme.

Bei dem in den Fign. 9 bis 15 dargestellten Ausführungsbeispiel einer Spannvorrichtung ist der axiale Versatz der Enden der Stirnseiten 20a', 21a', 25a', 25b' der Ausnehmungen 20a, 21a, 25a, 25b gleich groß und beträgt für das schon erwähnte Ausführungsbeispiel 0,05 mm.

Fig. 15 zeigt korrespondierend zu Fig. 14 die Einzelheit Z₂ der in Fig. 13 dargestellten ersten Spannbacke 21 in einer Vergrößerung von 5:1.

Die zu der Fig. 14 gemachten Ausführungen sind auf die Fig. 15 übertragbar, wobei die erste Spannbacke 21 über eine Ausnehmung 21a und eine Stirnseite 21a' verfügt.

### Bezugszeichenliste

- 1: Bundlager
- 2: Lagerschale
- 2': Lagerschalenstützkörper
- 2": Lagerschalenauskleidung
- 2'a: Vordere Stirnseite der Lagerschale
- 3: Anlaufscheibe
- 3': Anlaufscheibenstützkörper
- 3": Anlaufscheibenauskleidung
- 4: Nut
- 5: Nut
- 6: Nut
- 7: Anlaufscheibenende
- 8: Schweißnaht
- 8': Schweißnaht
- 8'a: Vorderseite
- 8'b: Rückseite
- 9: Im wesentlichen paralleler Spalt
- 10: Fügestelle
- 11: Schweißnahtachse
- 12: Äußere Umfangsmantelfläche
- 13: Inneres Umfangsmantelflächensegment
- 14: Ausstanzungen
- 15: Laserschweißstrahl
- 16: Fokus
- 17: Keilförmiger Spalt
- 18: Spannvorrichtung
- 19: Aufnahme
- 20: Spannbacke
- 20a: Ausnehmung

- 20a': Stirnseite
- 21: Spannbacke
- 21a: Ausnehmung
- 21a': Stirnseite
- 22: Spannelement
- 22': Aufnahme für das zweite Spannelement
- 23: Spannelement
- 23': Anschlag
- 24: erste Ausnehmung
- 25a: zweite Ausnehmung
- 25a': Stirnseite
- 25b: zweite Ausnehmung
- 25b': Stirnseite
- 26: Bolzen
- 27: Bohrung
- 28: Spannplatte
- 30: Phase
- α: Winkel zwischen der mindestens einen Anlaufscheibe (3) und der äußeren Umfangsmantelfläche (12) der Lagerschale (2)
- ε: Vorhaltewinkel
- β: Anstellwinkel
- a: axialer Versatz

## Patentansprüche

1. Bundlager (1) mit Lagerschale (2) und mindestens einer Anlaufscheibe (3), wobei die mindestens eine Anlaufscheibe (3) auf einer äußeren Umfangsnnantelfläche (12) der Lagerschale (2) befestigt ist und in einer Fügestelle (10), die zwischen der äußeren Umfangsmantelfläche (12) der Lagerschale (2) und einem inneren Umfangsmantelflächensegment (13) der Anlaufscheibe (3) angeordnet ist, die mindestens eine Anlaufscheibe (3) an der Lagerschale (2) im Betrieb bleibend angeschweißt ist, **dadurch gekennzeichnet, daß** die Schweißnaht (8, 8') in axialer Richtung nur über einen Teilbereich der Fügestelle (10) verläuft und ohne Nachbearbeitung der Winkel α zwischen der mindestens einen Anlaufscheibe (3) und der äußeren Umfangsmantelfläche (12) der Lagerschale (2) einen Wert von 90° ± 50' (Minuten) einnimmt.

2. Bundlager (1) nach Anspruch 1, **dadurch gekennzeichnet, daß** der Winkel α einen Wert von 90° ± 35' (Minuten) einnimmt.

3. Bundlager (1) nach einem der vorherigen Ansprüche, **dadurch gekennzeichnet, daß** der Winkel α einen Wert von 90° ± 25' (Minuten) einnimnnt.

4. Bundlager (1) nach einem der vorherigen Ansprüche, **dadurch gekennzeichnet, daß** die Schweißnaht (8, 8') über eine Rückseite (8'b) und eine Vorderseite (8'a) verfügt und auf der Rückseite (8'b) der Schweißnaht (8, 8') im übrigen ein im wesentlichen paralleler Spalt (9) zwischen der äußeren Umfangsmantelfläche (12) der Lagerschale (2) und dem inneren Umfangsmantelflächensegment (13) der Anlaufscheibe (3) ausgebildet ist.

5. Bundlager (1) nach einem der vorherigen Ansprüche, **dadurch gekennzeichnet, daß** der Radius des inneren Umfangsmantelsegmentes (13) der Anlaufscheibe (3) dem Radius der äußeren Umfangsmantelfläche (12) der Lagerschale (2) im wesentlichen über den gesamten Umfang der Anlaufscheibe (3) entspricht.

6. Bundlager (1) nach einem der vorhergehenden Ansprüche, **dadurch** gekenazeichnet, daß die mindestens eine Anlaufscheibe (3) an der Lagerschale (2) lasergeschweißt ist.

7. Bundlager (1) nach einem der vorherigen Ansprüche, **dadurch gekennzeichnet, daß** die mindestens eine Anlaufscheibe (3) über im wesentlichen den gesamten Umfang der Anlaufscheibe (3) an der Lagerschale (2) angeschweißt ist.

8. Bundlager (1) nach einem der vorherigen Ansprüche, **dadurch gekennzeichnet, daß** das Bundlager (1) von außen geschweißt ist, so daß die Schweißnaht (8, 8'), welche eine Rückseite (8'b) und eine Vorderseite (8'a) aufweist, ihre Vorderseite (8'a) auf der der Anlaufscheibenauskleidung (3") zugewandten Seite hat.

9. Bundlager (1) nach einem der Ansprüche 1 bis 7, **dadurch gekennzeichnet, daß** das Bundlager (1) innen geschweißt ist, so daß die Schweißnaht (8, 8'), welche eine Rückseite (8'b) und eine Vorderseite (8'a) aufweist, ihre Vorderseite (8'a) auf der der Anlaufscheibenauskleidung (3') abgewandten Seite hat.

10. Bundlager (1) nach einem der vorherigen Ansprüche, **dadurch gekennzeichnet, daß** die Lagerschale (2) mindestens eine in Umfangsrichtung umlaufende Nut (4) auf einer inneren Umfangsmantelfläche (14) der Lagerschale (2), vorzugsweise an deren Rand aufweist.

11. Bundlager (1) nach einem der vorherigen Ansprüche, **dadurch gekennzeichnet, daß** die Lagerschale (2) mindestens eine Nut (6) auf einer inneren Umfangsmantelfläche (14) der Lagerschale (2), vorzugsweise in deren Mitte aufweist.

12. Bundlager (1) nach einem der vorherigen Ansprüche, ausgebildet als Bundlagerhalbschale, mit zwei Anlaufscheiben, **dadurch gekennzeichnet, daß** sich die zwei Anlaufscheiben (3) in Umfangsrichtung zumindest teilweise über die Lagerschale (2) hinaus erstrecken.

13. Bundlager (1) nach einem der vorherigen Ansprüche, **dadurch gekennzeichnet, daß** die mindestens eine Anlaufscheibe (3) an ihrem inneren Umfangsmantelflächensegment (13) Ausstanzungen (14) aufweist.

14. Verfahren zur Herstellung eines Bundlagers (1) mit einer Lagerschale (2) und mindestens einer Anlaufscheibe (3), wobei die mindestens eine Anlaufscheibe (3) auf einer äußeren Umfangsmantelfläche (12) der Lagerschale (2) befestigt wird, wobei
- in einer Fügestelle (10), die zwischen einer äußeren Umfangsmantelfläche (12) der Lagerschale (2) und einem inneren Umfangsmantelflächensegment (13) der Anlaufscheibe (3) angeordnet ist, die mindestens eine Anlaufscheibe (3) an der Lagerschale (2) bleibend angeschweißt wird,
- **dadurch gekennzeichnet, daß** die mindestens eine Anlaufscheibe (3) über ihren gesamten Umfang unter einem Winkel α ± ε zwischen der mindestens einen Anlaufscheibe (3) und der äußeren Umfangsmantelfläche (12) der Lagerschale (2) vorgehalten wird, wobei α dem Sollwinkel zwischen der mindestens einen Anlaufscheibe (3) und der äußeren Umfangsmantelfläche (12) der Lagerschale (2) entspricht und ε der Vorhaltewinkel ist, der derart gewählt wird, daß er nach dem Schweißvorgang und Aufhebung der Vorhaltung infolge Abkühlung kompensiert wird.

15. Verfahren nach Anspruch 14, **dadurch gekennzeichnet, daß** der Vorhaltewinkel |ε| ≤ 60' (Minuten) ist.

16. Verfahren nach Anspruch 4 oder 5, **dadurch gekennzeichnet, daß** der Vorhaltewinkel |ε| ≤ 50' (Minuten) ist.

17. Verfahren nach einem der Ansprüche 14 bis 16, **dadurch gekennzeichnet, daß** der Vorhaltewinkel |ε| ≤ 40' (Minuten) ist.

18. Verfahren nach einem der Ansprüche 14 bis 17, **dadurch gekennzeichnet, daß** der Vorhaltewinkel |ε| ≤ 30' (Minuten) ist.

19. Verfahren nach einem der Ansprüche 14 bis 18, **dadurch gekennzeichnet, daß** die mindestens eine Anlaufscheibe (3) über im wesentlichen den gesamten Umfang der Anlaufscheibe (3) an der Lagerschale (2) angeschweißt wird.

20. Verfahren nach einem der Ansprüche 14 bis 19, **dadurch gekennzeichnet, daß** als Schweißverfahren ein Laserschweißverfahren eingesetzt wird, wobei der Laserschweißstrahl (15) von einem Ende der auszubildenden Schweißnaht (8', 8") bis zu dem anderen Ende geführt wird.

21. Verfahren nach Anspruch 20, **dadurch gekennzeichnet, daß** der Laserschweißstrahl (15) in einem Winkel β von 10° bis 30° gegenüber der Bundlagerachse nach innen geneigt wird, wenn das Bundlager von außen geschweißt wird.

22. Verfahren nach einem der Ansprüche 20 bis 21, **dadurch gekennzeichnet, daß** der Laserschweißstrahl (15) fokussiert wird in der Art, daß der Fokus (16) vor dem keilförmigen Spalt (17) liegt, der aufgrund des Vorhaltens der Anlaufscheibe (3) ausgebildet wird.

23. Verfahren nach einem der Ansprüche 20 bis 22, **dadurch gekennzeichnet, daß** der Laserschweißstrahl (15) fokussiert wird in der Art, daß der Fokus (16) in dem keilförmigen Spalt (17) liegt, der aufgrund des Vorhaltens der Anlaufscheibe (3) ausgebildet wird.

24. Verfahren nach einem der Ansprüche 20 bis 23, **dadurch gekennzeichnet, daß** der Querschnitt des Laserschweißstrahls (15) größer als die Breite des keilförmigen Spaltes (17) ist.

25. Verfahren nach einem der Ansprüche 14 bis 24, **dadurch gekennzeichnet, daß** ein Schutzgas verwendet wird.

26. Verfahren nach einem der Ansprüche 14 bis 23, **dadurch gekennzeichnet, daß** das Bundlager (i) von außen geschweißt wird, so daß die Schweißnaht (8, 8'), welche eine Rückseite (8'b) und eine Vorderseite (8'a) aufweist, ihre Vorderseite (8'a) auf der der Aunlaufscheibenauskleidung (3") zugewandten Seite hat.

27. Verfahren nach einem der Ansprüche 14 bis 25, **dadurch gekennzeichnet, daß** das Bundlager (1) innen geschweißt wird, so daß die Schweißnaht (8, 8'), welche eine Rückseite (8'b) und eine Vorderseite (8'a) aufweist, ihre Vorderseite (8'a) auf der der Anlaufscheibenauskleidung (3') abgewandten Seite hat.

28. Verfahren nach einem der vorherigen Ansprüche, **dadurch gekennzeichnet, daß** die Schweißnaht (8, 8') im Querschnitt dreieckförmig ausgebildet ist.

29. Spannvorrichtung (18) zum Vorspannen mindestens einer Anlaufscheibe (3) mit einer Aufnahme (19), mindestens einer Spannbacke (20, 21) und mindestens zwei Spannelementen (22, 23), bei der die Aufnahme (19) eine erste Ausnehmung (24) zur Aufnahme einer Lagerschale (2) aufweist, welche mittels eines ersten Spannelementes (23) verspannt werden kann, und die Aufnahme (19) des weiteren mindestens eine zweite Ausnehmung (25a, 25b) zur Aufnahme der mindestens einen Anlaufscheibe (3) aufweist, wobei die mindestens eine zweite Ausnehmung (25a, 25b) in der Art ausgebildet ist, daß die mindestens eine Anlaufscheibe (3) mittels der mindestens einen Spannbacke (20, 21) und dem zweiten Spannelement (22) über ihren gesamten Umfang unter einem Winkel α ± ε zwischen der mindestens einen Anlaufscheibe (3) und der äußeren Umfangsmantelfläche (12) der Lagerschale (2) vorgespannt werden kann, wobei α dem Sollwinkel zwischen der mindestens einen Anlaufscheibe (3) und der äußeren Imfangsnmntelfläche (12) der Lagersehale (2) entspricht und ε der Vorhaltewinkel ist, der derart gewählt wird, daß er nach dem Schweißvorgang und Aufhebung der Vorhaltung infolge Abkühlung kompensiert wird.

## Claims

1. Collar end bearing (1) with a bearing shell (2) and at least one thrust washer (3), whereby the at least one thrust washer (3) is attached on an external peripheral surface shell (12) of the bearing shell (2) and in a joining site (10) which is arranged between the external peripheral surface shell (12) of the bearing shell (2) and an internal peripheral surface segment (13) of the thrust washer (3), the at least one thrust washer (3) is welded onto the bearing shell (2), remaining during operation, **characterised in that** the weld seam (8, 8') runs in the axial direction over only a partial region of the joining site (10) and, without further working, the angle α between the at least one thrust washer (3) and the external peripheral surface shell (12) of the bearing shell (2) has a value of 90° ± 50' (minutes).

2. Collar end bearing (1) according to claim 1, **characterised in that** the angle α has a value of 90° ± 35' (minutes).

3. Collar end bearing (1) according to one of the previous claims, **characterised in that** the angle α has a value of 90° ± 25' (minutes).

4. Collar end bearing (1) according to one of the previous claims, **characterised in that** the weld seam (8, 8') has a rear side (8'b) and a front side (8'a) and on the rear side (8'b) of the weld seam (8, 8') a substantially parallel gap (9) is also formed between the external peripheral surface shell (12) of the bearing shell (2) and the internal peripheral surface segment (13) of the thrust washer (3).

5. Collar end bearing (1) according to one of the previous claims, **characterised in that** the radius of the internal peripheral surface segment (13) of the thrust washer (3) corresponds to the radius of the external peripheral surface shell (12) of the bearing shell (2) substantially over the entire periphery of the thrust washer (3).

6. Collar end bearing (1) according to one of the previous claims, **characterised in that** the at least one thrust washer (3) is laser welded to the bearing shell (2).

7. Collar end bearing (1) according to one of the previous claims, **characterised in that** the at least one thrust washer (3) is welded onto the bearing shell (2) over substantially the whole periphery of the thrust washer (3).

8. Collar end bearing (1) according to one of the previous claims, **characterised in that** the collar end bearing (1) is welded from outside such that the weld seam (8, 8') which has a rear side (8'b) and a front side (8'a) has its front side (8'a) on the side facing towards the thrust washer lining (3").

9. Collar end bearing (1) according to one of the claims 1 to 7, **characterised in that** the collar end bearing (1) is welded from inside such that the weld seam (8, 8') which has a rear side (8'b) and a front side (8'a) has its front side (8'a) on the side facing away from the thrust washer lining (3').

10. Collar end bearing (1) according to one of the previous claims, **characterised in that** the bearing shell (2) has at least one groove (4) running in the peripheral direction on an internal peripheral surface shell (14) of the bearing shell (2), preferably at its edge.

11. Collar end bearing (1) according to one of the previous claims, **characterised in that** the bearing shell (2) has at least one groove (6) on an internal peripheral surface shell (14) of the bearing shell (2), preferably in its middle.

12. Collar end bearing (1) according to one of the previous claims, designed as a collar half bearing with two thrust washers, **characterised in that** the two thrust washers (3) extend in the peripheral direction at least partially beyond the bearing shell (2).

13. Collar end bearing (1) according to one of the previous claims, **characterised in that** the at least one thrust washer (3) has perforations (14) on its internal peripheral surface segment (13).

14. Method for manufacturing a collar end bearing (1) with a bearing shell (2) and at least one thrust washer (3), whereby the at least one thrust washer (3) is attached to an external peripheral surface shell (12) of the bearing shell (2), whereby in a joining site (10), which is arranged between the external peripheral surface shell (12) of the bearing shell (2) and an internal peripheral surface segment (13) of the thrust washer (3), the at least one thrust washer (3) is permanently welded onto the bearing shell (2), **characterised in that** the at least one thrust washer (3) is held over its whole periphery at an angle α ± ε between the at least one thrust washer (3) and the external peripheral surface shell (12) of the bearing shell (2), whereby α corresponds to the target angle between the at least one thrust washer (3) and the external peripheral surface shell (12) of the bearing shell (2) and ε is the deflection angle that is chosen such that it is compensated for after the welding procedure and removal of the deflection, due to cooling.

15. Method according to claim 14, **characterised in that** the deflection angle |ε| ≤ 60' (minutes).

16. Method according to claim 4 or 5, **characterised in that** the deflection angle |ε| ≤ 50' (minutes).

17. Method according to one of the claims 14 to 16, **characterised in that** the deflection angle |ε| ≤ 40' (minutes).

18. Method according to one of the claims 14 to 17, **characterised in that** the deflection angle |ε| ≤ 30' (minutes).

19. Method according to one of the claims 14 to 18, **characterised in that** the at least one thrust washer (3) is welded onto the bearing shell (2) over substantially the whole periphery of the thrust washer (3).

20. Method according to one of the claims 14 to 19, **characterised in that** a laser welding method is used as the welding method, whereby the laser welding beam (15) is guided from one end of the weld seam (8', 8" ) to be formed to the other end.

21. Method according to claim 20, **characterised in that that** laser welding beam (15) is inclined inwardly at an angle β in the range 10° to 30° relative to the axis of the collar end bearing if the collar end bearing is welded from outside.

22. Method according to one of the claims 20 to 21, **characterised in that** the laser welding beam (15) is focused in a manner such that the focus (16) lies in front of the wedge-shaped gap (17), which is formed due to the deflection of the thrust washer (3).

23. Method according to one of the claims 20 to 22, **characterised in that** the laser welding beam (15) is focused in a manner such that the focus (16) lies in the wedge-shaped gap (17), which is formed due to the deflection of the thrust washer (3).

24. Method according to one of the claims 20 to 23, **characterised in that** the cross-section of the laser welding beam (15) is larger than the width of the wedge-shaped gap (17).

25. Method according to one of the claims 14 to 24, **characterised in that** a protective gas is used.

26. Method according to one of the claims 14 to 23, **characterised in that** the collar end bearing (1) is welded from outside such that the weld seam (8, 8'), which has a rear side (8'b) and a front side (8'a) , has its front side (8'a) on the side facing towards the thrust washer lining (3').

27. Method according to one of the claims 14 to 25, **characterised in that** the collar end bearing (1) is welded from inside such that the weld seam (8, 8'), which has a rear side (8' b) and a front side (8' a), has its front side (8'a) on the side facing away from the thrust washer lining (3").

28. Method according to one of the previous claims, **characterised in that** the weld seam (8, 8') is triangular in cross-section.

29. Tensioning device (18) for pretensioning at least one thrust washer (3) with a receptacle (19), at least one clamping jaw (20, 21) and at least two clamping elements (22, 23), whereby the receptacle (19) has a first recess (24) for accommodating a bearing shell (2) which may be tensioned by means of a first clamping element (23), and the receptacle (19) also has at least one second recess (25a, 25b) for accommodating the at least one thrust washer (3), whereby the at least one second recess (25a, 25b) is designed in a manner such that the at least one thrust washer (3) may be pretensioned by means of the at least one clamping jaw (20, 21) and the second clamping element (22) over its whole periphery at an angle of α ± ε between the at least one thrust washer (3) and the external peripheral surface shell (12) of the bearing shell (2), whereby α corresponds to the target angle between the at least one thrust washer (3) and the external peripheral surface shell (12) of the bearing shell (2) and ε is the deflection angle which is chosen such that it is compensated for after the welding procedure and release of the deflection, due to cooling.

## Revendications

1. Palier (1) à embase avec un coussinet (2) et au moins une rondelle de butée (3), sachant que la rondelle de butée (3) au moins unique est fixée sur une face d'enveloppe circonférentielle extérieure (12) du coussinet (2), et sachant que la rondelle de butée (3) au moins unique est soudée de manière durable en service sur le coussinet (2) en un joint (10) qui est disposé entre la face d'enveloppe circonférentielle extérieure (12) du coussinet (2) et un segment (13) de face d'enveloppe circonférentielle intérieure de la rondelle de butée (3), **caractérisé en ce que** le cordon de soudure (8, 8') ne s'étend en direction axiale que sur une région partielle du joint (10), et l'angle α entre la rondelle de butée (3) au moins unique et la face d'enveloppe circonférentielle extérieure (12) du coussinet (2) prend, sans usinage de rectification, une valeur de 90° ± 50' (minutes).

2. Palier (1) à embase selon la revendication 1, **caractérisé en ce que** l'angle α prend une valeur de 90° ± 35' (minutes).

3. Palier (1) à embase selon l'une des revendications précédentes, **caractérisé en ce que** l'angle α prend une valeur de 90° ± 25' (minutes).

4. Palier (1) à embase selon l'une des revendications précédentes, **caractérisé en ce que** le cordon de soudure (8, 8') dispose d'un côté arrière (8'b) et d'un côté avant (8'a), et un interstice (9) essentiellement parallèle est formé sur le côté arrière (8'b) du cordon de soudure (8, 8') entre la face d'enveloppe circonférentielle extérieure (12) du coussinet (2) et le segment (13) de face d'enveloppe circonférentielle intérieure de la rondelle de butée (3).

5. Palier (1) à embase selon l'une des revendications précédentes, **caractérisé en ce que** le rayon du segment (13) de face d'enveloppe circonférentielle intérieure de la rondelle de butée (3) correspond au rayon de la face d'enveloppe circonférentielle extérieure (12) du coussinet (2) sensiblement sur toute la circonférence de la rondelle de butée (3).

6. Palier (1) à embase selon l'une des revendications précédentes, **caractérisé en ce que** la rondelle de butée (3) au moins unique est soudée au laser sur le coussinet (2).

7. Palier (1) à embase selon l'une des revendications précédentes, **caractérisé en ce que** la rondelle de butée (3) au moins unique est soudée sur le coussinet (2) sensiblement sur toute la circonférence de la rondelle de butée (3).

8. Palier (1) à embase selon l'une des revendications précédentes, **caractérisé en ce que** le palier (1) à embase est soudé de l'extérieur, de sorte que le cordon de soudure (8, 8'), qui présente un côté arrière (8'b) et un côté avant (8'a), possède son côté avant (8'a) sur le côté tourné vers le garnissage (3") de la rondelle de butée.

9. Palier (1) à embase selon l'une des revendications 1 à 7, **caractérisé en ce que** le palier (1) à embase est soudé de l'intérieur, de sorte que le cordon de soudure (8; 8'), qui présente un côté arrière (8'b) et un côté avant (8'a), possède son côté avant (8'a) sur le côté opposé au garnissage (3') de la rondelle de butée.

10. Palier (1) à embase selon l'une des revendications précédentes, **caractérisé en ce que** le coussinet (2) présente au moins une rainure (4) circonférentiellement entourante sur une face d'enveloppe circonférentielle intérieure (14) du coussinet (2), de préférence sur les bords de cette face.

11. Palier (1) à embase selon l'une des revendications précédentes, **caractérisé en ce que** le coussinet (2) présente au moins une rainure (6) sur une face d'enveloppe circonférentielle intérieure (14) du coussinet (2), de préférence au milieu de cette face.

12. Palier (1) à embase selon l'une des revendications précédentes, réalisé sous forme de demi-coquille de coussinet de palier à embase pourvue de deux rondelles de butée, **caractérisé en ce que** les deux rondelles de butée (3) s'étendent, en direction circonférentielle, au moins partiellement au-delà du coussinet (2).

13. **Palier** (1) à embase selon l'une des revendications précédentes, **caractérisé en ce que** la rondelle de butée (3) au moins unique présente des découpures (14) sur son segment (13) de face d'enveloppe circonférentielle intérieure.

14. Procédé de fabrication d'un palier (1) à embase avec un coussinet (2) et au moins une rondelle de butée (3), sachant que la rondelle de butée (3) au moins unique est fixée sur une face d'enveloppe circonférentielle extérieure (12) du coussinet (2),
et sachant que la rondelle de butée (3) au moins unique est soudée de manière durable sur le coussinet (2) en un joint (10) qui est disposé entre la face d'enveloppe circonférentielle extérieure (12) du coussinet (2) et un segment (13) de face d'enveloppe circonférentielle intérieure de la rondelle de butée (3),
**caractérisé en ce que** la rondelle de butée (3) au moins unique est pré-maintenue sur toute sa circonférence sous un angle α ± ε entre la rondelle de butée (3) au moins unique et la face d'enveloppe circonférentielle extérieure (12) du coussinet (2), α étant l'angle de consigne entre la rondelle de butée (3) au moins unique et la face d'enveloppe circonférentielle extérieure (12) du coussinet (2) et ε étant l'angle de pré-maintien, qui est choisi de telle sorte qu'il est compensé suite au refroidissement après l'opération de soudage et la suppression du pré-maintien.

15. Procédé selon la revendication 14, **caractérisé en ce que** l'angle de pré-maintien |ε| est inférieur ou égal à 60' (minutes).

16. Procédé selon la revendication 14 ou 15, **caractérisé en ce que** l'angle de pré-maintien |ε| est inférieur ou égal à 50' (minutes).

17. Procédé selon l'une des revendications 14 à 16, **caractérisé en ce que** l'angle de pré-maintien |ε| est inférieur ou égal à 40' (minutes).

18. Procédé selon l'une des revendications 14 à 17, **caractérisé en ce que** l'angle de pré-maintien |ε| est inférieur ou égal à 30' (minutes).

19. Procédé selon l'une des revendications 14 à 18, **caractérisé en ce que** la rondelle de butée (3) au moins unique est soudée sur le coussinet (2) sensiblement sur toute la circonférence de la rondelle de butée (3).

20. Procédé selon l'une des revendications 14 à 19, **caractérisé en ce qu'**on utilise comme méthode de soudage une méthode de soudage au laser, le faisceau laser (15) de soudage étant dirigé d'une extrémité à l'autre du cordon de soudure (8', 8") à former.

21. Procédé selon la revendication 20, **caractérisé en ce que** le faisceau laser (15) de soudage est incliné vers l'intérieur sous un angle β de 10° à 30° par rapport à l'axe du palier à embase, si le palier à embase est soudé de l'extérieur.

22. Procédé selon la revendication 20 ou 21, **caractérisé en ce que** le faisceau laser (15) de soudage est focalisé de telle sorte que le foyer (16) se trouve en avant de l'interstice cunéiforme (17) qui est formé du fait du pré-maintien de la rondelle de butée (3).

23. Procédé selon l'une des revendications 20 à 22, **caractérisé en ce que** le faisceau laser (15) de soudage est focalisé de telle sorte que le foyer (16) se trouve dans l'interstice cunéiforme (17) qui est formé du fait du pré-maintien de la rondelle de butée (3).

24. Procédé selon l'une des revendications 20 à 23, **caractérisé en ce que** la section du faisceau laser (15) de soudage est supérieure à la largeur de l'interstice cunéiforme (17).

25. Procédé selon l'une des revendications 14 à 24, **caractérisé en ce qu'**on utilise un gaz protecteur.

26. Procédé selon l'une des revendications 14 à 23, **caractérisé en ce que** le palier (1) à embase est soudé de l'extérieur, de sorte que le cordon de soudure (8, 8'), qui présente un côté arrière (8'b) et un côté avant (8'a), possède son côté avant (8'a) sur le côté tourné vers le garnissage (3") de la rondelle de butée.

27. Procédé selon l'une des revendications 14 à 25, **caractérisé en ce que** le palier (1) à embase est soudé de l'intérieur, de sorte que le cordon de soudure (8, 8'), qui présente un côté arrière (8'b) et un côté avant (8'a), possède son côté avant (8'a) sur le côté opposé au garnissage (3') de la rondelle de butée.

28. Procédé selon l'une des revendications précédentes, **caractérisé en ce que** le cordon de soudure (8, 8') est réalisé de section triangulaire.

29. Dispositif de serrage (18) pour pré-contraindre au moins une rondelle de butée (3), comportant un support (19), au moins un mors de serrage (20, 21) et au moins deux éléments de serrage (22, 23), selon lequel le support (19) présente un premier évidement (24) pour recevoir un coussinet (2) qui peut être serré au moyen d'un premier élément de serrage (23), et le support (19) présente en outre au moins un deuxième évidement (25a, 25b) pour recevoir la rondelle de butée (3) au moins unique, sachant que le deuxième évidement (25a, 25b) au moins unique est conçu de telle sorte que la rondelle de butée (3) au moins unique peut, au moyen du mors de serrage (20, 21) au moins unique et du deuxième élément de serrage (22), être pré-contrainte sur toute sa circonférence sous un angle α ± ε entre la rondelle de butée (3) au moins unique et la face d'enveloppe circonférentielle extérieure (12) du coussinet (2), α étant l'angle de consigne entre la rondelle de butée (3) au moins unique et la face d'enveloppe circonférentielle extérieure (12) du coussinet (2) et ε étant l'angle de pré-maintien, qui est choisi de telle sorte qu'il est compensé suite au refroidissement après l'opération de soudage et la suppression du pré-maintien.
